# EUROPEAN PATENT APPLICATION

(11) **EP 4 351 193 A1**
(43) Date of publication of application: **10.04.2024**
(21) Application number: 22823988.5
(22) Date of filing: 17.05.2022
(51) Int. Cl.: H04W 12/06, H04W 88/00

(54) **METHOD, APPARATUS AND SYSTEM FOR RELAY COMMUNICATION**

(30) Priority: 18.06.2021 CN 202110676220
(71) Applicant: Huawei Technologies Co., Ltd., Shenzhen, Guangdong 518129 (CN)
(72) Inventor: LUO, Haiyan, Shenzhen, Guangdong 518129 (CN); ZHU, Yuanping, Shenzhen, Guangdong 518129 (CN); ZENG, Qinghai, Shenzhen, Guangdong 518129 (CN)
(74) Representative: Huawei European IPR
(86) International application number: PCT/CN2022/093251
(87) International publication number: WO 2022/262506

(57) **Abstract**

This application provides a relay communication method, an apparatus, and a system. The method includes: An access network device receives first information from a terminal device, where the first information includes an identifier of a first relay device; the access network device receives second information from a core network element, where the second information includes information of a relay device that the terminal device is allowed to access; and the access network device determines, based on the first information and the second information, whether the terminal device is allowed to access the first relay device.

## Description

This application claims priority to Chinese Patent Application No. 202110676220.6, filed with the China National Intellectual Property Administration on June 18, 2021 and entitled "RELAY COMMUNICATION METHOD, APPARATUS, AND SYSTEM", which is incorporated herein by reference in its entirety.

### TECHNICAL FIELD

This application relates to the communication field, and more specifically, to a relay communication method, an apparatus, and a system.

### BACKGROUND

An integrated access and backhaul (integrated access and backhaul, IAB) technology is introduced into 5th generation mobile communication (5G), and a wireless transmission solution is used for both an access link (access link) and a backhaul link (backhaul link) in the IAB technology, to avoid optical fiber deployment.

In an IAB network, a relay node (relay node, RN), which is also referred to as an IAB node, may provide a radio access service for user equipment (user equipment, UE). Service data of the UE is transmitted by the IAB node to an IAB donor (donor) over a wireless backhaul link. The IAB node may include a mobile terminal (mobile terminal, MT) part and a distributed unit (distributed unit, DU) part. When facing a parent node of the IAB node, the IAB node may serve as a terminal device, that is, a role of the MT. When a child node (the child node may be another IAB node or common UE) of the IAB node, the IAB node is considered as a network device, that is, a role of the DU.

In the IAB network, how to better serve the UE through the relay node is a problem that needs to be resolved currently.

### SUMMARY

This application provides a relay communication method and an apparatus, so that a relay device can better serve a terminal device.

According to a first aspect, a relay communication method is provided. The method may be performed by an access network device, or may be performed by a chip or a circuit configured in the access network device. This is not limited in this application. The method includes: An access network device receives first information from a core network element, where the first information includes information of a relay device that a terminal device is allowed to access; and the access network device receives second information from the terminal device, where the second information includes an identifier of a first relay device, where the first information and the second information are used to determine whether the terminal device is allowed to access the first relay device.

Based on the foregoing solution, the access network device may determine, based on the information of the relay device that a network allows the terminal device to access, whether the terminal device is allowed to access the first relay device. In this way, a quantity of terminal devices that access the first relay device is effectively controlled, so that the first relay device better serves the terminal device. In addition, signaling overheads generated when the terminal device directly accesses the first relay device without determining, and the access is finally rejected by the first relay device are reduced.

In a possible implementation, the second information further includes at least one of a public land mobile network identifier associated with the first relay device, a network slice identifier associated with the first relay device, and a non-public network identifier associated with the first relay device.

In a possible implementation, the first information includes an identifier of the relay device.

Based on the foregoing solution, when the first information includes the identifier of the relay device, the access network device may determine, based on the identifier of the relay device and the identifier of the first relay device, whether the terminal device is allowed to access the first relay device. In this way, the quantity of terminal devices that access the first relay device is effectively controlled, so that the first relay device better serves the terminal device.

In a possible implementation, the first information includes at least one of a public land mobile network identifier associated with the relay device, a network slice identifier associated with the relay device, and a non-public network identifier associated with the relay device.

Based on the foregoing solution, when the first information includes another identifier associated with the relay device instead of the identifier of the relay device, the access network device needs to determine, based on a mapping relationship between the identifier of the relay device and the another identifier included in the first information, whether the terminal device is allowed to access the first relay device. In this way, the quantity of terminal devices that access the first relay device is effectively controlled, so that the first relay device better serves the terminal device.

In a possible implementation, the access network device receives third information from the first relay device, where the third information includes the identifier of the first relay device and any one or more of the following associated with the identifier of the first relay device: the public land mobile network PLMN identifier, the network slice identifier, and the non-public network NPN identifier.

Based on the foregoing solution, when the first information does not include the identifier of the relay device, the access network device obtains a mapping relationship between the identifier of the first relay device and another network identifier (for example, the PLMN identifier, the network slice identifier, or the NPN identifier) from the first relay device, to determine, based on the first information, the second information, and the third information, whether the terminal device is allowed to access the first relay device. In this way, the quantity of terminal devices that access the first relay device is effectively controlled, so that the first relay device better serves the terminal device.

In a possible implementation, the access network device receives an initial context setup request message from a mobility management network element, where the initial context setup request message includes the first information.

In a possible implementation, the access network device sends first indication information to the terminal device, where the first indication information indicates the terminal device to access the first relay device.

According to a second aspect, a relay communication method is provided. The method may be performed by an access network device, or may be performed by a chip or a circuit configured in the access network device. This is not limited in this application. The method includes: An access network device receives fourth information from a terminal device, where the fourth information includes geographical position information or measurement result information of the terminal device. The access network device obtains fifth information from a first relay device, where the fifth information includes geographical position information or measurement result information of the first relay device, and determine a position relationship between the terminal device and the first relay device based on the geographical position information reported by the terminal device and the first relay device or based on the measurement result information reported by the terminal device and the first relay device.

Based on the foregoing solution, the access network device may determine a relative position relationship between the terminal device and the first relay device based on the geographical position information, such as longitude and latitude information, that is reported by the terminal device and the first relay device. If a difference between the geographical position reported by the terminal device and the geographical position reported the first relay device is less than a threshold, it is considered that the terminal device and the first relay device are relatively static. Therefore, when determining to perform handover on the first relay device subsequently, the access network device may enable the terminal device to be handed over together. On the contrary, if the difference between the geographical position reported by the terminal device and the geographical position reported the first relay device is greater than or equal to the threshold, the terminal device is subsequently handed over separately, that is, the terminal device is not handed over together with the first relay device.

Alternatively, the access network device may determine the relative position relationship between the terminal device and the first relay device based on the measurement results, such as reference signal received power or reference signal received quality, that are reported by the terminal device and the first relay device. If a difference between the measurement result reported by the terminal device and the measurement result reported by first relay device is less than a threshold, it is considered that the terminal device and the first relay device are relatively static. Therefore, when determining to perform handover on the first relay device subsequently, the access network device may enable the terminal device to be handed over together. On the contrary, if the difference between the measurement result reported by the terminal device and the measurement result reported by first relay device is greater than or equal to the threshold, the terminal device is subsequently handed over separately, that is, the terminal device is not handed over together with the first relay device. This ensures service continuity.

In a possible implementation, the access network device sends first configuration information to the terminal device, where the first configuration information is used to report the geographical position information or the measurement result information, and the first configuration information may further indicate an initial moment, a period, or an end moment for reporting the geographical position information or the measurement result information by the terminal device. The access network device sends second configuration information to the first relay device, where the second configuration information is used to report the geographical position information or the measurement result information, and the second configuration information may further indicate an initial moment, a period, or an end moment for reporting the geographical position information or the measurement result information by the first relay device.

Based on the foregoing solution, the access network device configures, for the terminal device and the first relay device, the specific time for reporting the geographical position information or the measurement result information, so that the access network device can more accurately determine the relative position relationship between the terminal device and the first relay device based on geographical positions (or measurement results) reported at a same moment or within a period of time.

In a possible implementation, the fourth information further includes time information associated with the geographical position information or time information associated with the measurement result information, and the fifth information further includes time information associated with the geographical position information or time information associated with the measurement result information.

Based on the foregoing solution, when reporting the geographical position information or the measurement result information, the terminal device and the first relay device report carried timestamp information, to avoid a case in which the access network device cannot determine whether the information received from terminal device and the information from the first relay device belong to a same time, and therefore cannot accurately determine the position relationship between the terminal device and the first relay device.

According to a third aspect, a relay communication method is provided. The method may be performed by a core network element. The method includes: A core network element obtains first information, where the first information includes information of a relay device that a terminal device is allowed to access; and the core network element sends the first information to an access network device, where the first information is used to determine whether the terminal device is allowed to access a first relay device.

In the foregoing solution, the core network element may be a mobility management network element. The mobility management network element may obtain the first information by using subscription information of the terminal device, or the mobility management network element may obtain the first information in another manner. Further, the core network element notifies the access network device of the first information, so that the access network device determines whether the terminal device is allowed to access the first relay device. In this way, a quantity of terminal devices that access the first relay device is effectively controlled, so that the first relay device better serves the terminal device.

In a possible implementation, the first information includes an identifier of the relay device.

In a possible implementation, the first information includes at least one of a public land mobile network identifier associated with the relay device, a network slice identifier associated with the relay device, and a non-public network identifier associated with the relay device.

In a possible implementation, the core network element sends an initial context setup request message to the access network device, where the initial context setup request message includes the first information.

According to a fourth aspect, a relay communication method is provided. The method may be performed by a first relay device. The method includes: A first relay device obtains third information, where the third information includes an identifier of the first relay device and one or more of the following associated with the identifier of the first relay device: a public land mobile network PLMN identifier, a network slice identifier, and a non-public network NPN identifier. The first relay device sends the third information to an access network device or a terminal device, where the third information is used to determine whether the terminal device is allowed to access the first relay device.

Based on the foregoing solution, when the first information does not include the identifier of the relay device, the access network device can obtain a mapping relationship between the identifier of the first relay device and another network identifier (for example, the PLMN identifier, the network slice identifier, or the NPN identifier), to determine, based on the first information, second information, and the third information, whether the terminal device is allowed to access the first relay device.

In a possible implementation, the first relay device sends a broadcast message to the terminal device, where the broadcast message includes the third information.

According to a fifth aspect, a relay communication method is provided. The method may be performed by a first relay device. The method includes: A first relay device sends fifth information to an access network device, where the fifth information includes geographical position information or measurement result information of the first relay device, and the fifth information is used to determine a position relationship between a terminal device and the first relay device.

In a possible implementation, the first relay device receives second configuration information from the access network device, where the second configuration information is used to report the geographical position information or the measurement result information, and the second configuration information may further indicate an initial moment, a period, or an end moment for reporting the geographical position information or the measurement result information by the first relay device.

Based on the foregoing solution, the access network device configures related information for reporting the geographical position information or the measurement result information, so that the access network device can determine a relative position relationship between the terminal device and the first relay device by using the reported geographical position information or measurement result information, and further determine to hand over the first relay device and the terminal device as a whole or separately hand over the first relay device and the terminal device as individuals, to ensure service continuity of the terminal device.

In a possible implementation, the fifth information further includes time information associated with the geographical position information or time information associated with the measurement result information.

Based on the foregoing solution, the specific time of the geographical position information or the measurement result information is reported, so that the access network device can more accurately determine the relative position relationship between the terminal device and the first relay device based on geographical positions (or measurement results) reported at a same moment or within a period of time.

In a possible implementation, the first relay device receives first indication information from the access network device, where the first indication information indicates the terminal device to access the first relay device, and the first relay device sends the first indication information to the terminal device.

According to a sixth aspect, a relay communication method is provided. The method may be performed by a terminal device, or may be performed by a chip or a circuit configured in the terminal device. This is not limited in this application. The method includes: A terminal device receives second information from a core network element, where the second information includes information of a relay device that the terminal device is allowed to access; and the terminal device receives third information from a first relay device, where the third information includes an identifier of the first relay device and one or more of the following associated with the identifier of the first relay device: a public land mobile network PLMN identifier, a network slice identifier, and a non-public network NPN identifier. The terminal device determines, based on the second information and the third information, whether the terminal device is allowed to access the first relay device.

Based on the foregoing solution, the terminal device may determine, based on the information that is sent by the core network element and that is of the relay device that a network allows to access, whether the first relay device allows the access by the terminal device. In this way, a quantity of terminal devices that access the first relay device is effectively controlled, so that the first relay device better serves the terminal device. In addition, signaling overheads generated when the terminal device directly accesses the first relay device without determining of an access network device are reduced.

In a possible implementation, the second information includes an identifier of the relay device, and at least one of a public land mobile network identifier associated with the relay device, a network slice identifier associated with the relay device, and a non-public network identifier associated with the relay device.

In a possible implementation, the terminal device receives a registration accept message from a mobility management network element, where the registration accept message includes the second information.

In a possible implementation, the terminal device receives a broadcast message from the first relay device, where the broadcast message includes the third information.

According to a seventh aspect, a relay communication method is provided. The method may be performed by a terminal device, or may be performed by a chip or a circuit configured in the terminal device. This is not limited in this application. The method includes: A terminal device sends fourth information to an access network device, where the fourth information includes geographical position information or measurement result information of the terminal device, and the fourth information is used to determine a position relationship between the terminal device and a first relay device.

Based on the foregoing solution, the access network device configures related information for reporting the geographical position information or the measurement result information, so that the access network device can determine a relative position relationship between the terminal device and the first relay device by using the reported geographical position information or measurement result information, and further determine to hand over the first relay device and the terminal device as a whole or separately hand over the first relay device and the terminal device as individuals, to ensure service continuity of the terminal device.

In a possible implementation, the terminal device receives first configuration information from the access network device, where the first configuration information is used to report the geographical position information or the measurement result information, and the first configuration information may further indicate an initial moment, a period, or an end moment for reporting the geographical position information or the measurement result information by the terminal device.

In a possible implementation, the fourth information further includes time information associated with the geographical position information or time information associated with the measurement result information.

Based on the foregoing solution, the specific time of the geographical position information or the measurement result information is reported, so that the access network device can more accurately determine the relative position relationship between the terminal device and the first relay device based on geographical positions (or measurement results) reported at a same moment or within a period of time.

In a possible implementation, the terminal device receives first indication information from the access network device, where the first indication information indicates whether the terminal device accesses the first relay device.

According to an eighth aspect, a relay communication apparatus is provided. The apparatus may be an access network device, or may be a chip or a circuit configured in the access network device. This is not limited in this application. The apparatus includes a transceiver unit. The transceiver unit is configured to receive first information from a core network element, where the first information includes information of a relay device that a terminal device is allowed to access; and the transceiver unit is further configured to receive second information from the terminal device, where the second information includes an identifier of a first relay device, where the first information and the second information are used to determine whether the terminal device is allowed to access the first relay device.

Based on the foregoing solution, the access network device may determine, based on the information that is notified by the core network element and that is of the relay device that a network allows the terminal device to access, whether the first relay device allows the access by the terminal device. In this way, a quantity of terminal devices that access the first relay device is effectively controlled, so that the first relay device better serves the terminal device. In addition, signaling overheads incurred when the terminal device directly accesses the first relay device without determining of the access network device are reduced.

In a possible implementation, the second information further includes at least one of a public land mobile network identifier associated with the first relay device, a network slice identifier associated with the first relay device, and a non-public network identifier associated with the first relay device.

In a possible implementation, the first information includes an identifier of the relay device.

Based on the foregoing solution, when the first information includes the identifier of the relay device, the access network device may determine, based on the identifier of the relay device and the identifier of the first relay device, whether the terminal device is allowed to access the first relay device.

In a possible implementation, the first information includes at least one of a public land mobile network identifier associated with the relay device, a network slice identifier associated with the relay device, and a non-public network identifier associated with the relay device.

Based on the foregoing solution, when the first information does not include the identifier of the relay device, the access network device needs to determine, based on a mapping relationship between the identifier of the relay device and another identifier included in the first information, whether the terminal device is allowed to access the first relay device.

In a possible implementation, the transceiver unit is further configured to receive third information from the first relay device, where the third information includes the identifier of the first relay device and any one or more of the following associated with the identifier of the first relay device: the public land mobile network PLMN identifier, the network slice identifier, and the non-public network NPN identifier.

Based on the foregoing solution, when the first information does not include the identifier of the relay device, the access network device can obtain a mapping relationship between the identifier of the first relay device and another network identifier (for example, the PLMN identifier, the network slice identifier, or the NPN identifier) from the first relay device, to determine, based on the first information, the second information, and the third information, whether the terminal device is allowed to access the first relay device.

In a possible implementation, the transceiver unit is specifically configured to receive an initial context setup request message from a mobility management network element, where the initial context setup request message includes the first information.

In a possible implementation, the transceiver unit is further configured to send first indication information to the terminal device, where the first indication information indicates the terminal device to access the first relay device.

According to a ninth aspect, a relay communication apparatus is provided. The apparatus may be a core network element. The apparatus includes a transceiver unit. The transceiver unit is configured to obtain first information, where the first information includes information of a relay device that a terminal device is allowed to access; and the transceiver unit is further configured to send the first information to an access network device, where the first information is used to determine whether the terminal device is allowed to access a first relay device.

In the foregoing solution, the core network element may be a mobility management network element. The mobility management network element may obtain the first information by using subscription information of the terminal device, or the mobility management network element may obtain the first information in another manner. Further, the core network element notifies the access network device of the first information, so that the access network device determines whether the terminal device is allowed to access the first relay device. In this way, a quantity of terminal devices that access the first relay device is effectively controlled, so that the first relay device better serves the terminal device.

In a possible implementation, the first information includes an identifier of the relay device.

In a possible implementation, the first information includes at least one of a public land mobile network identifier associated with the relay device, a network slice identifier associated with the relay device, and a non-public network identifier associated with the relay device.

In a possible implementation, the transceiver unit is specifically configured to send an initial context setup request message to the access network device, where the initial context setup request message includes the first information.

According to a tenth aspect, a relay communication apparatus is provided. The apparatus may be a first relay device. The apparatus includes a transceiver unit. The transceiver unit is configured to obtain third information, where the third information includes an identifier of the first relay device and one or more of the following associated with the identifier of the first relay device: a public land mobile network PLMN identifier, a network slice identifier, and a non-public network NPN identifier. The transceiver unit is further configured to send the third information to an access network device or a terminal device, where the third information is used to determine whether the terminal device is allowed to access the first relay device.

Based on the foregoing solution, when first information does not include an identifier of the relay device, the access network device can obtain a mapping relationship between the identifier of the first relay device and another network identifier (for example, the PLMN identifier, the network slice identifier, or the NPN identifier), to determine, based on the first information, second information, and the third information, whether the terminal device is allowed to access the first relay device.

In a possible implementation, the transceiver unit is specifically configured to send a broadcast message to the terminal device, where the broadcast message includes the third information.

According to an eleventh aspect, a communication apparatus is provided. The apparatus may be the access network device according to the first aspect or the second aspect, may be an electronic device configured in the access network device, or may be a larger device including the access network device. The apparatus is configured to perform the method according to the first aspect or the second aspect. The apparatus includes a transceiver.

Optionally, the apparatus further includes a processor. The processor is coupled to a memory, and may be configured to execute instructions in the memory, to implement the method according to the first aspect or the second aspect and any possible implementation of the first aspect or the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in the access network device. When the apparatus is the chip configured in the access network device, the communication interface may be an input/output interface, an interface circuit, an output circuit, an input circuit, a pin, a related circuit, or the like on the chip or a chip system. The processor may alternatively be a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a communication apparatus is provided. The apparatus may be the core network element according to the third aspect. The apparatus is configured to perform the method according to the third aspect. The apparatus includes a transceiver.

Optionally, the apparatus further includes a processor. The processor is coupled to the memory, and may be configured to execute instructions in the memory, to implement the communication method according to the third aspect and any possible implementation of the third aspect. Optionally, the communication apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in the core network element. When the apparatus is the chip configured in the core network element, the communication interface may be an input/output interface, an interface circuit, an output circuit, an input circuit, a pin, a related circuit, or the like on the chip or a chip system. The processor may alternatively be a processing circuit or a logic circuit.

According to a thirteenth aspect, a communication apparatus is provided. The apparatus may be the first relay device according to the fourth aspect or the fifth aspect. The apparatus is configured to perform the method according to the fourth aspect or the fifth aspect. The apparatus includes a transceiver.

Optionally, the apparatus further includes a processor. The processor is coupled to a memory, and may be configured to execute instructions in the memory, to implement the communication method according to the fourth aspect or the fifth aspect and any possible implementation of the fourth aspect or the fifth aspect. Optionally, the communication apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in the first relay device. When the apparatus is the chip configured in the first relay device, the communication interface may be an input/output interface, an interface circuit, an output circuit, an input circuit, a pin, a related circuit, or the like on the chip or a chip system. The processor may alternatively be a processing circuit or a logic circuit.

According to a fourteenth aspect, a communication apparatus is provided. The apparatus may be the terminal device according to the sixth aspect or the seventh aspect. The apparatus is configured to perform the method according to sixth aspect or the seventh aspect. The apparatus includes a transceiver.

Optionally, the apparatus further includes a processor. The processor is coupled to a memory, and may be configured to execute instructions in the memory, to implement the communication method according to the sixth aspect or the seventh aspect and any possible implementation of the sixth aspect or the seventh aspect. Optionally, the communication apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in the terminal device. When the apparatus is the chip configured in the terminal device, the communication interface may be an input/output interface, an interface circuit, an output circuit, an input circuit, a pin, a related circuit, or the like on the chip or a chip system. The processor may alternatively be a processing circuit or a logic circuit.

According to a fifteenth aspect, a computer program product is provided. The computer program product includes a computer program (which may alternatively be referred to as code or instructions). When the computer program is run, a computer is enabled to perform the method according to any one of the first aspect to the seventh aspect and any possible implementation of any one of the first aspect to the seventh aspect.

According to a sixteenth aspect, a computer-readable storage medium is provided. The computer-readable storage medium stores a computer program (which may alternatively be referred to as code or instructions). When the computer program is run on a computer, the computer is enabled to perform the method according to any one of the first aspect to the seventh aspect and any possible implementation of any one of the first aspect to the seventh aspect.

According to a seventeenth aspect, a communication system is provided, including the access network device, the core network element, and the first relay device. Optionally, the communication system further includes the terminal device.

### BRIEF DESCRIPTION OF DRAWINGS

FIG. 1 is a schematic diagram of a communication system 100 to which an embodiment of this application is applicable;
FIG. 2 is a diagram of an architecture of a communication network of CU-DU split in a communication system 100 according to this application;
FIG. 3 is a schematic diagram of a control plane protocol stack and a user plane protocol stack of a CU-DU architecture according to this application;
FIG. 4 is a diagram of an architecture of a communication network with integrated access and backhaul according to this application;
FIG. 5(a) and FIG. 5(b) are a schematic diagram of a control plane protocol stack and a user plane protocol stack of an integrated backhaul architecture according to an embodiment of this application;
FIG. 6 to FIG. 13 each are an interaction flowchart of a relay communication method according to an embodiment of this application;
FIG. 14 is a schematic block diagram of a communication apparatus according to an embodiment of this application;
FIG. 15 is a schematic block diagram of another communication apparatus according to an embodiment of this application;
FIG. 16 is a schematic diagram of a structure of a communication apparatus according to an embodiment of this application; and
FIG. 17 is a schematic diagram of a structure of another communication apparatus according to an embodiment of this application.

### DESCRIPTION OF EMBODIMENTS

The following describes technical solutions of this application with reference to accompanying drawings.

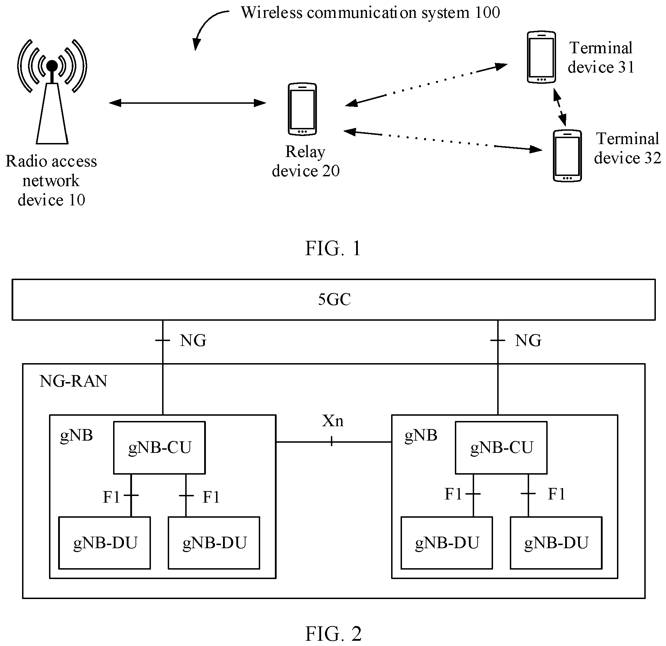

FIG. 1 is a schematic diagram of a wireless communication system 100 to which an embodiment of this application is applicable.

In the wireless communication system 100, a relay device 20 may be configured to provide relay services for at least one terminal device 31 or terminal device 32 and a radio access network device 10. There may be one or more relay devices 20, that is, the one or more relay devices provide the relay services for the terminal device and the radio access network device. The relay device is a terminal type node, and the relay device communicates with the terminal device through a sidelink sidelink (which is also referred to as a PC5 interface).

It should be noted that the wireless communication system 100 shown in FIG. 1 is only intended to describe the technical solutions of this application more clearly, and does not constitute a limitation on this application. A person of ordinary skill in the art may know that, with evolution of a network architecture and emergence of new service scenarios, the technical solutions provided in this application are also applicable to similar technical problems.

The terminal device in embodiments of this application may also be referred to as user equipment, an access terminal, a subscriber unit, a subscriber station, a mobile station, a mobile console, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

The radio access network device in embodiments of this application may be any device having a wireless transceiver function. The device includes but is not limited to: an evolved NodeB (evolved NodeB, eNB), a radio network controller (radio network controller, RNC), a NodeB (NodeB, NB), a radio network controller (radio network controller, RNC), a base station controller (base station controller, BSC), a base transceiver station (base transceiver station, BTS), a home base station (for example, home evolved NodeB, or home NodeB, HNB), a base band unit (base band unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (TRP or TP) in a 5G system like an NR system, may be an antenna panel or a group of antenna panels (including a plurality of antenna panels) of a base station in a 5G system, or may be a network node, like a baseband unit (BBU) or a distributed unit (distributed unit, DU), that constitutes a gNB or a transmission point. In some deployments, the radio access network device may include a central unit (central unit, CU) and a DU, or a RAN device including a CU node and a DU node.

It should be understood that the radio access network and the terminal device in embodiments of this application may be deployed on land, including an indoor or outdoor device, a handheld device, or a vehicle-mounted device, may be deployed on water, or may be deployed on an airplane, a balloon, or a satellite in air. Application scenarios of the network device and the terminal device are not limited in embodiments of this application.

The relay device in embodiments of this application may be a terminal device. For a specific example, refer to the foregoing enumeration of the terminal device. Details are not described herein again.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or a future evolved communication system, vehicle-to-X (vehicle-to-X V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), an internet of vehicles, machine type communication (machine type communication, MTC), an internet of things (Internet of things, loT), long term evolution-machine (long term evolution-machine, LTE-M), machine-to-machine (machine-to-machine, M2M), device-to-device (device-to-device, D2D), and the like.

It should be understood that this application may be applied to an independently deployed 5G or LTE system, or may be applied to a non-independently deployed 5G or LTE system, for example, a DC scenario, including a dual connectivity (E-UTRA-NR dual connectivity, EN-DC) scenario, a carrier aggregation (carrier aggregation, CA) scenario, and the like.

In embodiments of this application, the terminal device or the radio access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be the terminal device, the radio access network device, or a functional module that is in the terminal device or the radio access network device and that can invoke and execute the program.

It should be noted that in embodiments of this application, a plurality of applications may be run at the application layer. In this case, an application for performing a relay communication method in embodiments of this application may be different from an application configured to control a receiving device to implement an action corresponding to received data.

FIG. 2 is a diagram of an architecture of a communication network of CU-DU split in a communication system 100 according to this application.

In a 5G system, a base station is referred to as a gNB/ng-eNB, and mainly includes a radio resource control (radio resource control, RRC)/service data adaptation protocol (service data adaptation protocol, SDAP)/packet data convergence protocol (packet data convergence protocol, PDCP)/radio link control (radio link control, RLC)/media access control (media access control, MAC)/physical (physical, PHY) protocol layer. The gNB is used as an example in the following description. gNBs are connected through an Xn interface. The gNB connects to a 5GC through an NG interface.

Functions of the gNB are split. Some functions of the gNB are deployed on a CU, and remaining functions are deployed on a DU. A plurality of DUs share one CU, which can reduce costs and facilitate network expansion. In addition, the CU may be classified into a network device in an access network (radio access network, RAN), or the CU may be classified into a network device in a core network (core network, CN). This is not limited in this application.

The CU and the DU may be split based on a protocol stack. In a possible manner, RRC, SDAP, and PDCP layers are deployed in the CU, and the RLC layer, the MAC layer, and the PHY layer are deployed in the DU. For example, in an LTE system, a radio access network (radio access network, RAN) device including a CU node and a DU node splits protocol layers of an eNB in the LTE system. Functions of some protocol layers are centrally controlled by the CU, functions of some or all of remaining protocol layers are distributed in the DU, and the CU centrally controls the DU. The gNB may further include an active antenna unit (active antenna unit, AAU for short). For example, in the 5G system, the CU implements some functions of the gNB, and the DU implements some functions of the gNB. For example, the CU is responsible for processing a non-real-time protocol and service, to implement functions of the RRC and PDCP layers. The DU is responsible for processing the PHY layer protocol and a real-time service, to implement functions of the RLC layer, the MAC layer, and the PHY layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. The CU is connected to the DU through an F1 interface. The CU is connected to the core network through the NG interface on behalf of the gNB, the CU is connected to another gNB through the Xn interface on behalf of the gNB, and on behalf of the gNB, the CU may alternatively be connected to another eNB through an X2 interface to perform a dual connectivity operation.

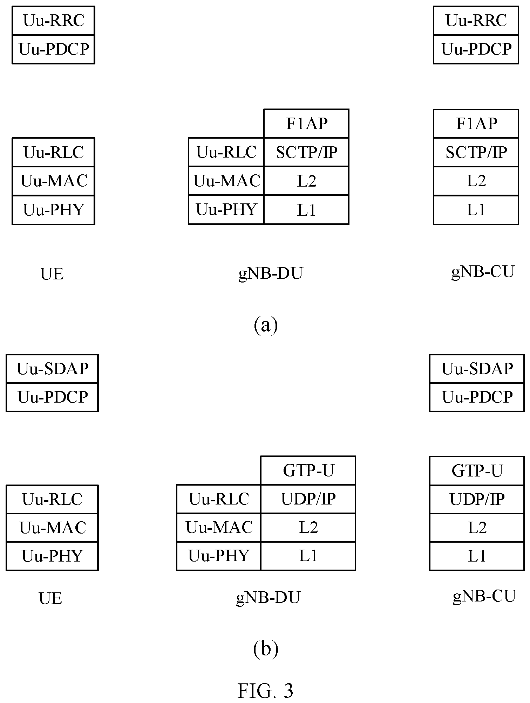

In a CU-DU architecture, a control plane protocol stack and a user plane protocol stack are respectively shown in FIG. 3 (a) and FIG. 3 (b). As shown in FIG. 3(a), a Uu air interface RLC/MAC/PHY layer exists between UE and gNB-DU, and an F1 interface is established between the gNB-DU and gNB-CU. The gNB-DU helps, by using an F1 application protocol (application protocol, AP), the UE and the gNB-CU exchange an RRC message encapsulated by using a Uu air interface PDCP. As shown in FIG. 3(b), the Uu air interface RLC/MAC/PHY layer exists between the UE and the gNB-DU, and the F1 interface is established between the gNB-DU and the gNB-CU. The gNB-DU helps, by using a GTP-U tunnel of a user plane general data transfer platform (general data transfer platform) of the F1 interface, the UE and the gNB-CU exchange a data packet encapsulated by using a Uu air interface PDCP/SDAP.

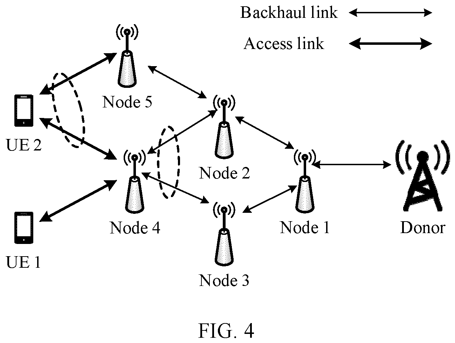

FIG. 4 is a diagram of an architecture of a communication network with integrated access and backhaul according to this application.

An integrated access and backhaul (integrated access and backhaul, IAB) technology is introduced into 5th generation mobile communication (5G), and a wireless transmission solution is used for both an access link (access link) and a backhaul link (backhaul link) in the IAB technology, to avoid optical fiber deployment.

In an IAB network, a relay node RN (relay node, RN), which is alternatively referred to as an IAB node (IAB node), may provide a radio access service for user equipment (user equipment, UE). Service data of the UE is transmitted by the IAB node to an IAB donor (IAB donor) connected over a wireless backhaul link. In this application, the IAB donor may also be referred to as a donor node (donor node) or a donor gNodeB (donor gNodeB, DgNB). The IAB node may include an MT (mobile terminal, mobile terminal) part and a DU part. When facing a parent node of the IAB node, the IAB node may serve as a terminal device, that is, a role of the MT. When a child node (the child node may be another IAB node or common UE) of the IAB node, the IAB node is considered as a network device, that is, a role of the DU. The donor gNodeB DgNB may be an access network element having a complete base station function, or may be an access network element in a form in which a CU and a DU are split. The donor gNodeB is connected to a core network (for example, connected to a 5G core network, 5GC) network element that serves the UE, and provides a wireless backhaul function for the IAB node. For ease of description, a central unit of the donor node is briefly referred to as a donor CU (or directly referred to as a CU), and a distributed unit of the donor node is briefly referred to as a donor DU. The donor CU may alternatively be in a form in which a control plane (control plane, CP) and a user plane (user plane, UP) are split, for example, the CU may include one CU-CP and one (or more) CU-UPs.

A new protocol layer, that is, a BAP (backhaul adaptation protocol, backhaul adaptation protocol) layer is introduced into IAB, and the protocol layer is located above an RLC layer and can be used to implement functions such as routing of a data packet on the wireless backhaul link and bearer mapping.

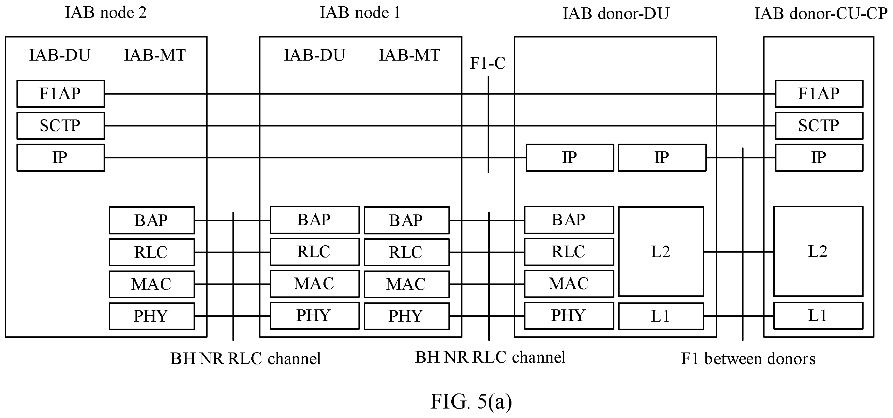

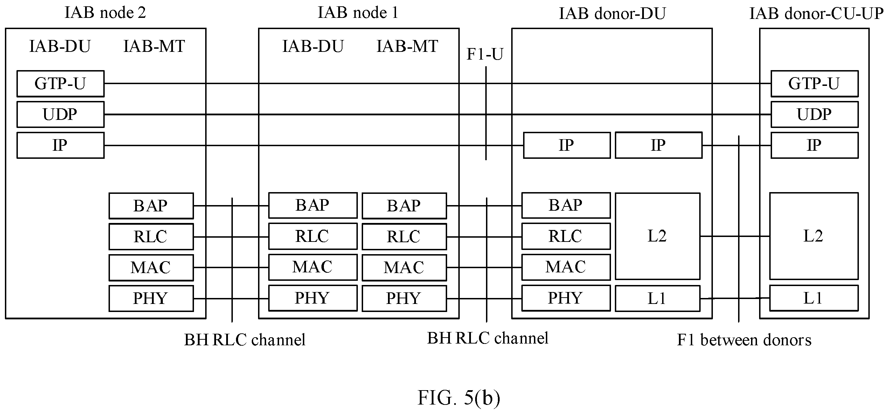

An F1 interface (or referred to as an F1* interface, which may be collectively referred to as the F1 interface in this specification, but a name is not limited) needs to be established between the IAB node (the DU part of IAB) and the donor node (or IAB-donor-CU). The interface supports a user plane protocol (F1-U/F1*-U) and a control plane protocol (F1-C/F1*-C). An IAB control plane protocol stack and an IAB user plane protocol stack are respectively shown in FIG. 5(a) and FIG. 5(b).

With enhancement of the IAB subject, mobile IAB emerges, and a vehicle-mounted relay (vehicle-mounted relay, VMR) in the mobile IAB need to enter a permitted area (permitted area) to support a function of a mobile relay (mobile relay). In other words, the vehicle-mounted relay can provide 5G access for nearby UE only when the vehicle-mounted relay reaches the permitted area.

For high-speed moving UE, an LTE high-speed railway network (high-speed railway dedicated LTE network, HSDN) communication method is proposed. In the method, a 1-bit HSDN indication is added to a system information block (system information block, SIB), so that the UE can find that a current cell is an HSDN cell by receiving a broadcast message. The system information further includes a quantity of cells used for UE speed test. For example, when the UE finds that a quantity of cells for cell reselection within a period of time exceeds a specific threshold, it is considered that the UE is in a high-speed moving state, and in this case, the UE preferentially selects the HSDN cell. When the UE is in the high-speed moving state, the UE preferentially selects a common cell. The system information includes both a frequency priority for the cell reselection and a cell reselection priority for the HSDN. The cell reselection priority for the HSDN has priority over the frequency priority. In addition, if the high-speed railway arrives at a station, the UE can determine that the UE is at low speed and preferentially access the common cell. If the high-speed railway is restarted later, the UE can reselect to the HSDN cell after a period of time. During this process, the cell reselection is frequently performed. To resolve this problem, a broadcast timer for station arrival of the high-speed railway is proposed. In this way, the UE in a high-speed railway station does not perform the cell reselection before countdown of the timer is over, thereby preventing frequent cell reselection caused by incorrect reselection to the common cell by the UE.

For example, the terminal device obtains, from the high-speed railway, an identification identifier indicating that the terminal device is located on the high-speed railway, and sends, to a gNB, authentication information generated based on the identification identifier, to access a cell of the gNB, where the cell of the gNB is a high-speed railway dedicated cell. Alternatively, the terminal device selects to the cell of the gNB based on the identification identifier.

In a possible implementation, the identification identifier may be obtained by using QR code information provided on the high-speed railway, or an identification device is disposed on a high-speed moving means of transport, to broadcast the identification identifier in a preset coverage area.

The foregoing solution is a communication solution in which the terminal device accesses the high-speed railway dedicated cell in the LTE high-speed railway network. The following begins to describe a communication solution after a relay device is added to the network structure, that is, how the mobile terminal accesses the donor gNB through the relay device in the mobile IAB network architecture. It should be understood that the relay device may be a mobile relay, for example, a vehicle-mounted relay. This is not limited in this application.

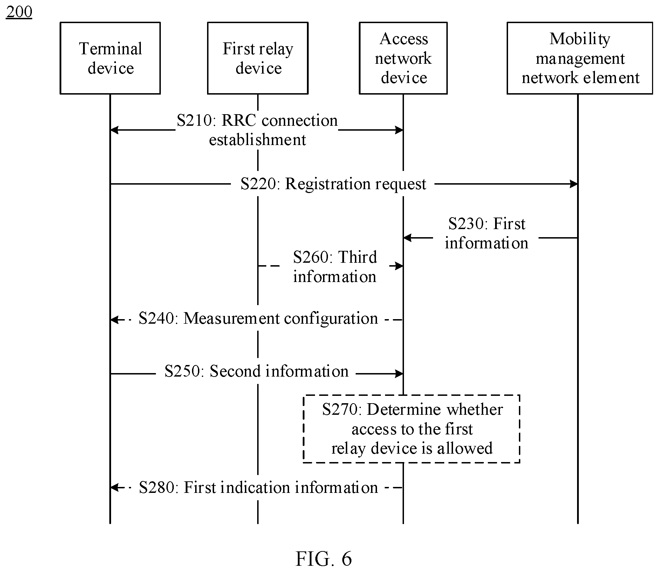

FIG. 6 is an interaction flowchart of a relay communication method according to an embodiment of this application. A method 200 shown in FIG. 6 includes the following steps.

Step S210: A terminal device establishes a connection to an access network device.

For example, the terminal device establishes an RRC connection to the access network device. The process may be that the terminal device directly establishes the RRC connection to the access network device, or may be that the terminal device establishes the RRC connection to the access network device through a relay device.

Step S220: The terminal device sends registration request information to a core network element, and correspondingly, the core network element receives the registration request information.

For example, the terminal device sends a non-access stratum (non-access stratum, NAS) message to a mobility management network element (for example, an access and mobility management network element (access and mobility management function, AMF) in an NR system), where the NAS message may be the registration request (registration request) message.

Step S230: The core network element sends first information to the access network device, where the first information includes information of a relay device that the terminal device is allowed to access. Correspondingly, the access network device receives the first information.

In a possible implementation, the mobility management network element may obtain the first information from subscription information of the terminal device, and then send the first information to the access network device. For example, the mobility management network element obtains the subscription information of the terminal device from a unified data management (unified data management, UDM) module, and further obtains the first information from the subscription information of the terminal device. It should be understood that the mobility management network element may alternatively obtain the first information in another manner.

For example, the mobility management network element sends an initial context setup request message (initial context setup request message) to the access network device by using an NG interface, where the initial context setup request message includes the first information.

Optionally, the first information includes an identifier of the relay device.

Optionally, the first information includes at least one of a public land mobile network (public land mobile network, PLMN) identifier associated with the relay device, a network slice identifier associated with the relay device, a non-public network identifier associated with the relay device, and a permitted area identifier associated with the relay device.

It should be understood that the identifier of the relay device is an identifier of the relay device that the terminal device is allowed to access (the identifier of the relay device may be a physical cell identifier (physical cell identifier, PCI), may be a cell global identifier (cell global identifier, CGI), or another identifier). This is not limited in this application.

It should be further understood that the PLMN identifier is an identifier of a PLMN associated with the relay device that the terminal device is allowed to access. The network slice identifier is an identifier of a network slice associated with the relay device that the terminal device is allowed to access. The network slice identifier may be single network slice selection assistance information (single network slice selection assistance information, S-NSSAI), may be a slice/service type (slice/service type, SST), or a slice differentiator (slice differentiator, SD). The non-public network identifier (non-public network, NPN) associated with the relay device is an NPN identifier associated with the relay device that the terminal device is allowed to access. The non-public network may also be referred to as a private network. The NPN identifier may be an identifier of a standalone non-public network (standalone non-public network, SNPN), that is, a network identifier (network identifier, NID), or may be a non-standalone non-public network identifier, that is a closed access group (closed access group, CAG) identifier. The permitted area identifier associated with the relay device may be an area identifier, for example, a tracking area code (tracking area code, TAC), a cell identifier, or another defined area identifier.

Step S250: The terminal device sends second information to the access network device, where the second information includes an identifier of a first relay device. Correspondingly, the access network device receives the second information.

In a possible implementation, before step S250, the method 200 further includes step S240: The access network device sends measurement configuration information to the terminal device. Correspondingly, after receiving the measurement configuration information, the terminal device sends a measurement report to the access network device, where the measurement report includes the second information and a corresponding measurement result. The measurement result may be reference signal received power (reference signal received power, RSRP) or reference signal received quality (reference signal received quality, RSRQ) of the first relay device that is measured by the terminal device, or the like.

Optionally, the second information further includes at least one of a public land mobile network identifier associated with the first relay device, a network slice identifier associated with the first relay device, a non-public network identifier associated with the first relay device, and a permitted area identifier associated with the first relay device.

It should be understood that the relay device that is mentioned in step S230 and that the terminal device is allowed to access may include the first relay device, or may not include the first relay device.

Optionally, the method 200 includes:
Step S260: The first relay device sends third information to the access network device, where the third information includes the identifier of the first relay device or the identifier of the first relay device and one or more of the following associated with the identifier of the first relay device: the PLMN identifier, the network slice identifier, the NPN identifier, and the permitted area identifier.

For example, the third information includes the identifier of the first relay device; or
the third information includes the identifier of the first relay device + the PLMN identifier/the network slice identifier/the NPN identifier/the permitted area identifier; or
the third information includes the identifier of the first relay device + the PLMN identifier + the network slice identifier/the NPN identifier/the permitted area identifier.

In a possible implementation, the third information is basic information of the first relay device, includes the identifier of the first relay device, and further includes at least one of the PLMN identifier to which the first relay device belongs, the network slice identifier supported by the first relay device, the non-public network identifier to which the first relay device belongs, and the permitted area identifier associated with the first relay device.

In another possible implementation, the third information includes only the identifier of the first relay device. In this manner, operation, administration, and maintenance (operation administration and maintenance, OAM) preconfigures, for the access network device, mapping relationships between the identifier of the relay device and the PLMN identifier to which the relay device belongs, between the identifier of the relay device and the network slice identifier supported by the relay device, and between the identifier of the relay device and the non-public network identifier to which the relay device belongs.

Optionally, the method 200 may further include:
Step S270: The access network device determines, based on the first information and the second information, whether the terminal device is allowed to access the first relay device.

In a possible implementation, when the first information includes the identifier of the relay device that the terminal device is allowed to access, and the second information includes an identifier (for example, the identifier of the first relay device) of a relay device discovered by the terminal device, the access network device may determine, based on the first information and the second information, whether the terminal device is allowed to access the first relay device.

In another possible implementation, when the first information includes the PLMN identifier, the network slice identifier, the NPN identifier, or the permitted area identifier associated with the identifier of the relay device that the terminal device is allowed to access, and the second information includes the PLMN identifier, the network slice identifier, the NPN identifier, or the permitted area identifier associated with an identifier (for example, the identifier of the first relay device) of a relay device discovered by the terminal device, the access network device may determine, based on the first information and the second information, whether the terminal device is allowed to access the first relay device.

In another possible implementation, when the first information includes the PLMN identifier, the network slice identifier, the NPN identifier, or the permitted area identifier associated with the identifier of the relay device, and the second information includes an identifier (for example, the identifier of the first relay device) of the relay device discovered by the terminal device, the access network device cannot determine, based only on the first information and the second information, whether the terminal device is allowed to access the first relay device. In this case, the access network device needs to determine, based on the first information, the second information, and the third information (the mapping relationship between the identifier of the relay device and the PLMN identifier/the network slice identifier/the NPN identifier/the permitted area identifier), whether the terminal device is allowed to access the first relay device. If the third information includes only the identifier of the first relay device, the access network device needs to obtain the mapping relationships that are between the identifier of the relay device and the PLMN identifier to which the relay device belongs, between the identifier of the relay device and the network slice identifier supported by the relay device, between the identifier of the relay device and the non-public network identifier to which the relay device belongs, and between the identifier of the relay device and the permitted area to which the relay device belongs and that are preconfigured by OAM, and then determines, based on the first information, the second information, and the mapping relationships preconfigured by OAM, whether the terminal device is allowed to access the first relay device.

Optionally, when the terminal device requests, from the access network device, a specific relay device for access, the access network device also needs to determine, based on the foregoing three possible implementations, the relay device that can be accessed by the terminal device.

Optionally, the method 200 includes:
Step S280: The access network device sends first indication information to the terminal device, where the first indication information indicates whether the terminal device accesses the first relay device, indicates that the terminal device accesses the first relay device, or indicates that the terminal device is not allowed to access the first relay device. Correspondingly, the terminal device receives the first indication information.

One possible implementation is as follows:
When the terminal device does not access the relay device, the access network device may indicate, by using the first indication information, the terminal device to access the first relay device.

When the terminal device accesses the first relay device, the access network device may indicate, by using the first indication information, the terminal device to disconnect from the first relay device, or the first indication information may further include identification information of a new relay device that is recommended for the terminal device to access. For example, the access network device sends an RRC message to the terminal device, where the RRC message includes the first indication information, and the first indication information indicates the terminal device to disconnect from the first relay device. The first indication information may include a disconnection indication, the first indication information may include the identifier of the new relay device that is recommended for the terminal device to access, or the first indication information may include the identifier of the new relay device that is recommended for the terminal device to access + a disconnection indication.

The other possible implementation is as follows:
When the terminal device accesses the first relay device, the access network device indicates, by using second indication information, the first relay device to disconnect from the terminal device, where the second indication information may be an identifier of the terminal device, the second indication information may be an identifier of the terminal device + a disconnection indication, the identifier of the terminal device may be a cell radio network temporary identifier (cell radio network temporary identifier, C-RNTI), or may be other identifiers used by the first relay device and the access network device to identify the terminal device, for example, a C-RNTI + a disconnection indication, or the second indication information may be a C-RNTI + a disconnection indication + an identifier of a new relay device. The first relay device may indicate, by using, for example, a MAC layer control element (control element, CE) or downlink control information (downlink control information, DCI), the terminal device to disconnect from the first relay device. Certainly, the first relay device may further indicate, by using the MAC layer CE or the DCI, the terminal device to connect to the new relay device. In other words, the MAC CE or the DCI may include the disconnection indication, the MAC CE or the DCI includes the identifier of the new relay device, or the MAC CE or the DCI includes the identifier of the new relay device + the disconnection indication.

It should be understood that a sequence of the steps in this embodiment of this application is determined based on internal logic of the method. Sequence numbers of the steps in FIG. 6 are merely examples, and are therefore not limited in this application. Similarly, descriptions of steps in the following embodiments are the same. Details are not described below again.

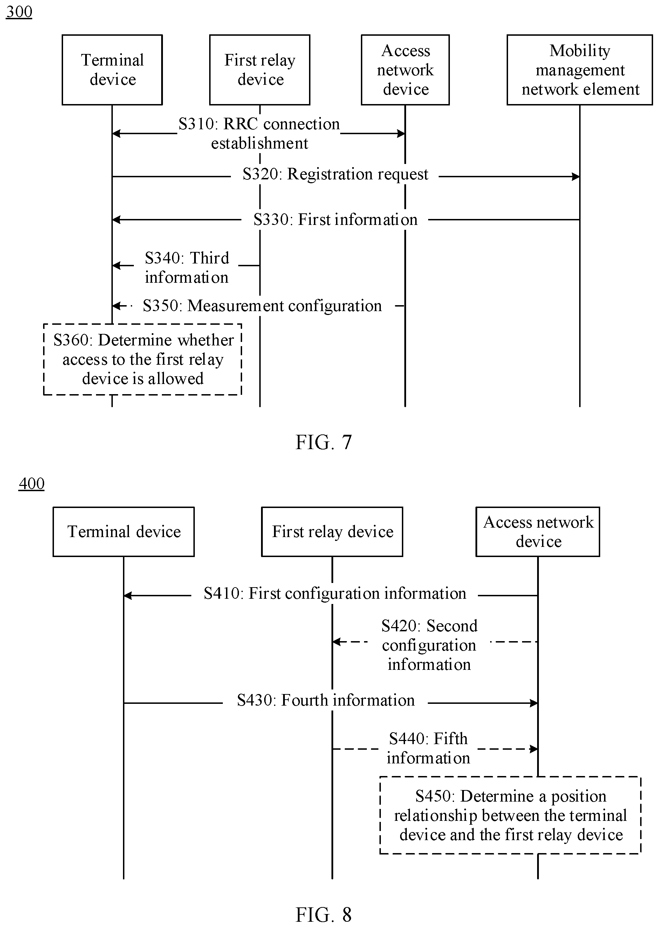

FIG. 7 is an interaction flowchart of another relay communication method according to an embodiment of this application. A method 300 shown in FIG. 7 includes the following steps.

Step S310: A terminal device establishes a connection to an access network device.

For example, the terminal device establishes an RRC connection to the access network device, the terminal device may directly establish the RRC connection to the access network device, or the terminal device may establish the RRC connection to the access network device through a relay device.

Step S320: The terminal device sends registration request information to a core network element, and correspondingly, the core network element receives the registration request information.

For example, the terminal device sends an NAS message to a mobility management network element AMF through the access network device, where the NAS message may be the registration request (registration request) message.

Step S330: The core network element sends first information to the terminal device, where the first information includes information of a relay device that the terminal device is allowed to access. Correspondingly, the terminal device receives the first information.

In a possible implementation, the mobility management network element may obtain the first information from subscription information of the terminal device, and then send the first information to the terminal device. For example, the mobility management network element obtains the subscription information of the terminal device from a UDM module, and further obtains the first information from the subscription information of the terminal device. It should be understood that the mobility management network element may alternatively obtain the first information in another manner.

For example, the mobility management network element sends the NAS message to the terminal device through the access network device, where the NAS message includes the first information. The NAS message may be a registration accept message.

Optionally, the first information includes an identifier of the relay device that the terminal device is allowed to access.

Optionally, the first information includes at least one of a public land mobile network identifier associated with the relay device that the terminal device is allowed to access, a network slice identifier associated with the relay device, a non-public network identifier associated with the relay device, and a permitted area identifier associated with the relay device. For details, refer to the foregoing descriptions.

Step S340: A first relay device sends third information to the terminal device. Correspondingly, the terminal device receives the third information.

In a possible implementation, the first relay device sends a broadcast message to the terminal device, where the broadcast message includes the third information.

Optionally, the third information includes an identifier of the first relay device or the identifier of the first relay device and one or more of the following associated with the identifier of the first relay device: a PLMN identifier, a network slice identifier, an NPN identifier, and a permitted area identifier.

For example, the third information includes the identifier of the first relay device; or
the third information includes the identifier of the first relay device + the PLMN identifier/the network slice identifier/the NPN identifier/the permitted area identifier; or
the third information includes the identifier of the first relay device + the PLMN identifier + the network slice identifier/the NPN identifier/the permitted area identifier.

In a possible implementation, the third information is basic information of the first relay device, includes the identifier of the first relay device, and further includes at least one of the PLMN identifier to which the first relay device belongs, the network slice identifier supported by the first relay device, the NPN identifier to which the first relay device belongs, and the permitted area identifier to which the first relay device belongs.

Optionally, the method further includes step S350: The access network device sends measurement configuration information to the terminal device.

Correspondingly, after receiving the measurement configuration information, the terminal device discovers and measures a nearby relay device, and selects a relay device with good signal quality to attempt access.

Step S360: The terminal device determines, based on the first information and the third information, whether the terminal device is allowed to access the first relay device.

In a possible implementation, when the first information includes the identifier of the relay device, and the third information broadcast by the first relay device over an air interface is the identifier (or may be the identifier of the first relay device + a relay device indication) of the first relay device, the terminal device may determine, based on the first information and the third information, whether the terminal device is allowed to access the first relay device, and the first relay device may be a relay device selected by the terminal device based on a measurement result. In another possible implementation, when the first information includes the PLMN identifier, the network slice identifier, the NPN identifier, or the permitted area identifier associated with the identifier of the relay device, and when the third information broadcast by the first relay device over an air interface is the PLMN identifier/the network slice identifier/the NPN identifier/the permitted area identifier + a relay device indication associated with the first relay device, similarly, the terminal device may determine, based on the PLMN identifier/the network slice identifier/the NPN identifier/the permitted area identifier included in the first information and the third information, whether the terminal device is allowed to access the first relay device.

It should be understood that the relay device indication indicates the terminal device that a device type of the first relay device is a relay device instead of a base station. After receiving the broadcast relay device indication, the terminal device may learn that the cell is a cell managed by the relay device and is different from another cell.

Optionally, after accessing the first relay device, the terminal device accesses the access network device through relay of the first relay device. In step S230 shown in FIG. 6, the access network device may re-determine, based on the first information provided by the mobility management network element, whether the terminal device can access the first relay device. If the access network device determines that the terminal device is not allowed to access the first relay device, the access network device may indicate, according to the method described in step S280, the terminal device or the first relay device to disconnect the connection. For a specific indication method, refer to the foregoing description. Details are not described herein again.

It should be understood that a position relationship between a terminal device served by the first relay device in a permitted area and the first relay device may be relatively static, or may be relatively moving. For example, the first relay device is a vehicle-mounted relay, and a terminal device served by the vehicle-mounted relay in a permitted area may be inside the vehicle or outside the vehicle. In this case, to ensure service continuity, the access network device needs to determine a position relationship between the terminal device and the first relay device, that is, whether the terminal device is in the vehicle in which the vehicle-mounted relay is located, to make the following decisions:
(1) determine whether to enable the terminal device to access the access network device through the first relay device; and
(2) after the terminal device accesses the access network device through the first relay device, subsequently determine to perform group handover (group handover) on the first relay device and the terminal device (when the first relay device and the terminal device are relatively static, that is, the terminal device served by the vehicle-mounted relay in the permitted area is in the vehicle in which the vehicle-mounted relay is located), or perform separate handover on the terminal device (when the first relay device and the terminal device are relatively moving, that is, the terminal device served by the vehicle-mounted relay in the permitted area is outside the vehicle in which the vehicle-mounted relay is located).

The group handover means that the access network device considers the first relay device and the terminal device as a group, and the handover is performed by group. The separate handover means that the access network device considers the first relay device and the terminal device as independent individuals, and separately makes handover decisions based on actual situations.

The following mainly describes a method for determining the position relationship between the terminal device and the first relay device. There are mainly the following several manners.

### Manner 1:

FIG. 8 is an interaction flowchart of another relay communication method according to an embodiment of this application. A method 400 shown in FIG. 8 includes the following steps.

Step S410: An access network device sends first configuration information to the terminal device, where the first configuration information is used by the terminal device to report geographical position information or measurement result information. Correspondingly, the terminal device receives the first configuration information.

Step S420: The access network device sends second configuration information to a first relay device, where the second configuration information is used by the first relay device to report geographical position information or measurement result information. Correspondingly, the first relay device receives the second configuration information.

Step S430: The terminal device sends fourth information to the access network device, where the fourth information includes the geographical position information or the measurement result information of the terminal device. Correspondingly, the access network device receives the fourth information.

Step S440: The first relay device sends fifth information to the access network device, where the fifth information includes the geographical position information or the measurement result information of the first relay device. Correspondingly, the access network device receives the fifth information.

Optionally, the method 400 further includes:
Step S450: The access network device determines, based on the fourth information and the fifth information, a position relationship between the terminal device and the first relay device.

When the first configuration information and the second configuration information are used to report the geographical position information,
optionally, the first configuration information and the second configuration information may further indicate at least one of an initial moment, a period, or an end moment for reporting the geographical position information by the terminal device and the first relay device. After receiving the first configuration information (the second configuration information), the terminal device (the first relay device) reports the geographical position information based on time (for example, the initial moment, the reporting period, or the end moment) configured in the first configuration information (the second configuration information).

It should be understood that if the initial reporting moment and the reporting period are configured in the first configuration information, the terminal device reports the geographical position information for the first time at the initial reporting moment, and then periodically reports the geographical position information based on the reporting period. If the initial reporting moment, the reporting period, and the reporting end moment are configured in the first configuration information, the terminal device reports the geographical position information for the first time at the initial reporting moment, and then periodically reports, based on the reporting period, the geographical position information before the end moment. The same rule applies to the first relay device.

Optionally, the fourth information further includes timestamp information associated with the geographical position information, and the fifth information further includes timestamp information associated with the geographical position information.

For example, at a moment 1, the terminal device (the first relay device) reports geographical position information 1 and time information of the moment 1 for the first time, at a moment 2, reports geographical position information 2 and time information of the moment 2 for the second time, at a moment 3, reports geographical position information 3 and time information of the moment 3 for the third time, and the same rule applies to the rest.

Specifically, the geographical position information may be longitude and/or latitude information.

In a possible implementation, the terminal device reports an identifier of a discovered relay device to the access network device, for example, an identifier of the first relay device, and then the access network device separately indicates, by using the first configuration information and the second configuration information, the terminal device and the first relay device to report the geographical position information based on the configuration.

In another possible implementation, the access network device selects a terminal device and a relay device, and then indicates, by using the first configuration information and the second configuration information, the terminal device and the relay device to report geographical position information based on the configuration.

In step S450: The access network device determines the position relationship between the terminal device and the first relay device based on geographical positions that are reported by the terminal device and the first relay device at a same moment.

For example, at a moment 1, the terminal device reports a geographical position 1, and the first relay device reports a geographical position 2. If a difference between the geographical position 1 and the geographical position 2 is less than a first threshold, it is considered that the first relay device and the terminal device are relatively static. If a difference between the geographical position 1 and the geographical position 2 is greater than or equal to a first threshold, it is considered that the first relay device and the terminal device are relatively moving.

It should be understood that, the foregoing example may alternatively be: If a difference between the geographical position 1 and the geographical position 2 is less than or equal to a first threshold, it is considered that the first relay device and the terminal device are relatively static. If a difference between the geographical position 1 and the geographical position 2 is greater than a first threshold, it is considered that the first relay device and the terminal device are relatively moving. A specific definition of the first relay device and the terminal device being relatively static or moving is not specifically limited in this application, and the same rule applies to similar descriptions below.

When the first configuration information and the second configuration information are used to report the measurement result information,
optionally, the first configuration information and the second configuration information may further indicate at least one of an initial moment, a period, or an end moment for reporting the measurement result information by the terminal device and the first relay device. After receiving the first configuration information (the second configuration information), the terminal device (the first relay device) reports the measurement result information based on time (for example, the initial moment, the reporting period, or the end moment) configured in the first configuration information (the second configuration information).

It should be understood that if the initial reporting moment and the reporting period are configured in the first configuration information, the terminal device reports the measurement result information for the first time at the initial reporting moment, and then periodically reports the measurement result information based on the reporting period. If the initial reporting moment, the reporting period, and the reporting end moment are configured in the first configuration information, the terminal device reports the measurement result information for the first time at the initial reporting moment, and then periodically reports, based on the reporting period, the measurement result information before the end moment. The same rule applies to the first relay device.

Optionally, the fourth information further includes timestamp information associated with the measurement result information, and the fifth information further includes timestamp information associated with the measurement result information.

For example, at a moment 1, the terminal device (the first relay device) reports measurement result information 1 and time information of the moment 1 for the first time, at a moment 2, reports measurement result information 2 and time information of the moment 2 for the second time, at a moment 3, reports measurement result information 3 and time information of the moment 3 for the third time, and the same rule applies to the rest.

Optionally, the fourth information or the fifth information may be a PCI and a corresponding measurement result, may be a synchronization signal and physical broadcast channel block (synchronization signal and physical broadcast channel block, SSB) identifier + a corresponding measurement result, or may be a PCI + an SSB identifier + a corresponding measurement result.

Specifically, the measurement result may be RSRP/RSRQ or the like.

In a possible implementation, the terminal device reports an identifier of a discovered relay device to the access network device, for example, the identifier of the first relay device, and then the access network device separately indicates, by using the first configuration information and the second configuration information, the terminal device and the first relay device to report the measurement result information based on the configuration.

In another possible implementation, the access network device selects a terminal device and a relay device, and then indicates, by using the first configuration information and the second configuration information, the terminal device and the relay device to report measurement result information based on the configuration.

In step S450: The access network device determines the position relationship between the terminal device and the first relay device based on measurement results that are reported by the terminal device and the first relay device at a same moment.

Specifically, at a same moment 1, the terminal device reports a measurement result 1, and the first relay device reports a measurement result 2. If a difference between the measurement result 1 and the measurement result 2 is less than a second threshold, it is considered that the first relay device and the terminal device are relatively static. If a difference between the measurement result 1 and the measurement result 2 is greater than or equal to a second threshold, it is considered that the first relay device and the terminal device are relatively moving.

For example, at the same moment 1, the measurement result 1 includes (PCI#1, RSRP#1-1), (PCI#2, RSRP#2-1), (PCI#3, RSRP#3-1), and the like. The measurement result 2 includes (PCI#1, RSRP#1-2), (PCI#2, RSRP#2-2), (PCI#3, RSRP#3-2), and the like. The difference between the measurement result 1 and the measurement result 2 is less than the second threshold. For example, a difference between PCI#1 and RSRP#1-1 and RSRP#1-2 is less than the second threshold, a difference between PCI#2 and RSRP#2-1 and RSRP#2-2 is less than the second threshold, and a difference between PCI#3 and RSRP#3-1 and RSRP#3-2 is less than the second threshold. In other words, the difference between the measurement result 1 and the measurement result 2 corresponding to each PCI is less than the second threshold. The difference between the measurement result 1 and the measurement result 2 is greater than or equal to the second threshold. For example, a difference between PCI#1 and RSRP#1-1 and RSRP#1-2 is greater than or equal to the second threshold, a difference between PCI#2 and RSRP#2-1 and RSRP#2-2 is greater than or equal to the second threshold, and a difference between PCI#3 and RSRP#3-1 and RSRP#3-2 is greater than or equal to the second threshold. In other words, the difference between the measurement result 1 and the measurement result 2 corresponding to each PCI (or at least one PCI) is greater than or equal to the second threshold.

Alternatively, the method 400 includes:
Step S410: The access network device sends first configuration information to the terminal device, where the first configuration information is used by the terminal device to report the measurement result information. Correspondingly, the terminal device receives the first configuration information.
Step S430: The terminal device sends the fourth information to the access network device, where the fourth information includes the measurement result information of the terminal device. Correspondingly, the access network device receives the fourth information.

Optionally, step S450 is further included: The access network device determines, based on the fourth information, the position relationship between the terminal device and the first relay device.

In a possible implementation, the access network device indicates, by using the first configuration information, the terminal device to periodically report the measurement result. In addition to reporting a measurement result of the first relay device, the terminal device may further report a measurement result of another cell.

For example, the terminal device reports RSRP/RSRQ of the first relay device and the another cell within a period of time.

In step S450: The access network device determines the position relationship between the terminal device and the first relay device based on the measurement results of the first relay device and the another cell.

For example, the access network device receives measurement results of a plurality of moments within a period of time, and finds that RSRP/RSRQ that is of the first relay device and that is measured by the terminal device falls within a range. RSRP is used as an example. It is assumed that a worst RSRP value that is of the first relay device and that is measured by the terminal device is RSRP_{low}, and a best RSRP value that is of the first relay device and that is measured by the terminal device is RSRP_{high}. In addition, worst RSRP of other non-first relay device cells (for example, PCI#1, PCI#2, and PCI#3) measured by the terminal device is respectively an RSRP1_{low} value, an RSRP2_{low} value, and an RSRP3_{low} value, and best RSRP values are respectively RSRP1_{high}, RSRP2_{high}, and RSRP3_{high}. If the following conditions are satisfied:
(1) a difference between RSRP_{low} and RSRP_{high} is less than a third threshold, and
(2) a difference between RSRP1_{low} and RSRP1_{high}, a difference between RSRP2_{low} and RSRP2_{high}, and a difference between RSRP3_{low} and RSRP3_{high} each are greater than or equal to the third threshold,
that is, if the access network device considers that a signal condition between the terminal device and the first relay device is stable, but a signal condition between the terminal device and the other non-first relay device cell changes greatly, the access network device may consider that the terminal device and the first relay device are relatively static.

If the following conditions are satisfied:
(1) a difference between RSRP_{low} and RSRP_{high} is greater than or equal to a third threshold, and
(2) a difference between RSRP1_{low} and RSRP1_{high}, a difference between RSRP2_{low} and RSRP2_{high}, and a difference between RSRP3_{low} and RSRP3_{high} each are less than the third threshold,
that is, if the access network device considers that a signal condition between the terminal device and the first relay device changes greatly, but a signal condition between the terminal device and the other non-first relay device cell is stable, the access network device may consider that the terminal device and the first relay device are relatively moving.

### Manner 2:

The access network device does not need to send the first configuration information and the second configuration information, and obtains the geographical positions of the terminal device and the first relay device in a positioning manner, to determine the position relationship between the terminal device and the first relay device.

For example, when a distance between the geographical position of the terminal device and the geographical position of the first relay device is less than a first threshold, it is considered that the terminal device and the first relay device are relatively static. For a specific determining manner, refer to the foregoing description.

### Manner 3:

The terminal device determines a relationship between the distance between the geographical position of the terminal device and the geographical position of the first relay device and the first threshold through link measurement or in another distance measurement manner, to determine the position relationship between the terminal device and the first relay device, and then notifies the access network device of a determining result. For a specific determining manner, refer to the foregoing description.

Optionally, if the terminal device is connected to the access network device through the first relay device when determining, the terminal device may indicate the specific determined position relationship to the access network device. If the terminal device is not connected to the access network device through the first relay device when determining, the terminal device indicates the determined specific position relationship and the identifier of the first relay device to the access network device.

For a case in which the terminal device is connected to the access network device through the first relay device, it is assumed that the first relay device may determine the position relationship between the terminal device and the first relay device. For example, the first relay device determines, by using a point-to-point distance measurement method between the first relay device and the terminal device, that when the distance between the terminal device and the first relay device is less than the first threshold, it is considered that the terminal device and the first relay device are relatively static, and when the distance between the terminal device and the first relay device is greater than or equal to the first threshold, the terminal device and the first relay device are relatively moving. Then, the first relay device notifies the access network device of the determining result.

For example, the first relay device notifies the access network device of the determining result. For example, the first relay device notifies the access network device of an identifier (for example, a C-RNTI or another identifier) of the terminal device + a position relationship indication, a list of identifiers of the terminal device that remains relatively static with the first relay device, or a list of identifiers of the terminal device that remains relatively moving with the first relay device. Specifically, the position relationship indication may be a field in car indication. A value of the field 1 or true indicates relatively static, and a value 0 or false indicates relatively moving, and vice versa. This is not limited in this application.

According to the foregoing method, after determining the position relationship between the first relay device and the terminal device, the access network device may determine whether the terminal device can access through the first relay device.

When the terminal device is allowed to access through the first relay device, the access network device may send, to the terminal device, an indication of accessing the first relay device. The indication may be carried in a downlink RRC message, or may be carried in a MAC CE or DCI.

Optionally, the indication may further carry the identifier of the first relay device, that is, the RRC message, the MAC CE, or the DCI carries the identifier of the first relay device and an access indication.

When the terminal device is not allowed to access through the first relay device, the access network device may send, to the terminal device, an indication indicating that the access to the first relay device is not allowed. The indication may be carried in the RRC message, the MAC CE, or the DCI.

The access not allowed indication may further carry the identifier of the first relay device, that is, the RRC message, the MAC CE, or the DCI carries the identifier of the first relay device and the access not allowed indication. In other words, the RRC message, the MAC CE, or the DCI implicitly indicates that the access is not allowed. For example, the RRC message is an RRCReject message.

Optionally, when the terminal device is not allowed to access the first relay device, the access network device may provide a cause value, for example, the cause value is not in car or not allowed mobile relay. The cause value and the access not allowed indication (explicit or implicit) may be carried in the RRC message, the MAC CE, or the DCI together.

### Manner 4:

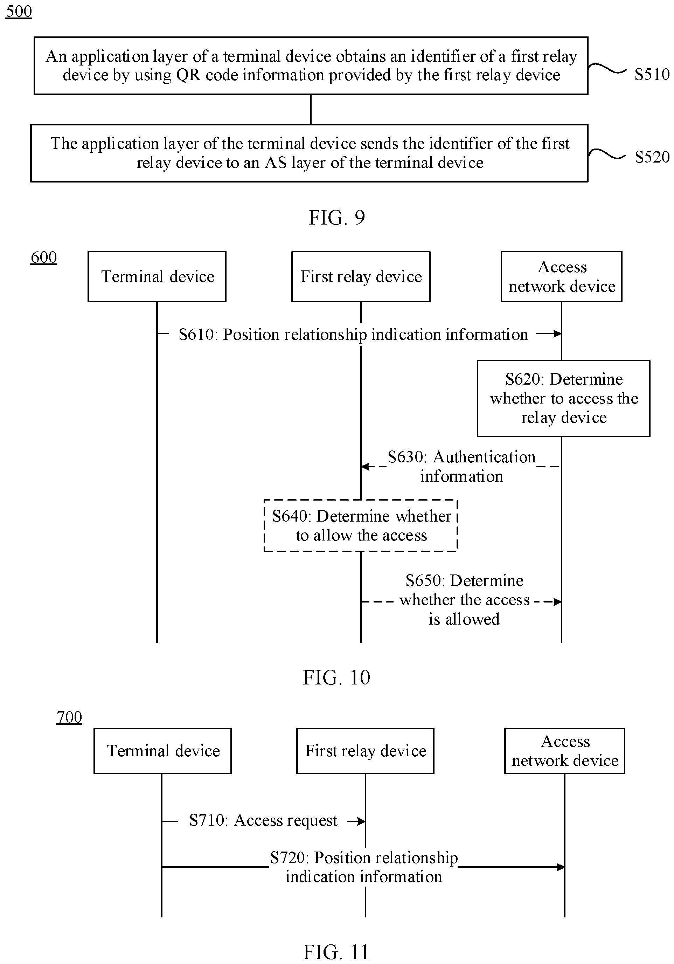

The terminal device determines the position relationship between the first relay device and the terminal device by using a method 500. The method 500 shown in FIG. 9 includes the following steps.

Step S510: An application (application, APP) layer of the terminal device obtains the identifier of the first relay device by using QR code information provided by the first relay device.

Optionally, the terminal device may further obtain authentication information or an authentication identifier that is of the terminal device and that is on the first relay device.

In a possible implementation, after a user arrives at a means of transport (for example, a high-speed railway) in which the first relay device is located, the user scans, by using a mobile application, the QR code that is of the first relay device and that is provided on the means of transport, to obtain the identifier of the first relay device and/or the authentication information or the authentication identifier that is of the terminal device and that is on the first relay device.

Step S520: The application layer of the terminal device sends the identifier of the first relay device to an access stratum (access stratum, AS) layer of the terminal device.

Optionally, the application layer of the terminal device sends position relationship indication information and/or the authentication information or the authentication identifier to the AS layer of the terminal device, where the position relationship indication information indicates the position relationship between the first relay device and the terminal device. For example, in a case in which the mobile application scans the code, the application layer indicates to the AS layer that the terminal device is currently on the first relay device, that is, the position relationship indication may be provided.

Optionally, the AS layer of the terminal device may independently determine whether to access the first relay device.

Alternatively, when sending the identifier of the first relay device, the application layer of the terminal device further provides an indication indicating whether to access the terminal device.

The following describes how the terminal device notifies the access network device of the position relationship between the first relay device and the terminal device.

FIG. 10 is an interaction flowchart of a relay communication method according to an embodiment of this application. A method 600 shown in FIG. 10 includes the following steps.

Step S610: A terminal device sends position relationship indication information to an access network device, where the position relationship indication information indicates a position relationship between a first relay device and the terminal device. Correspondingly, the access network device receives the position relationship indication information.

Optionally, the position relationship indication information is carried in an RRC message.

For example, the RRC message may be an RRC connection setup request message (RRC connection setup request), an RRC connection reestablishment request message (RRC connection reestablishment request), an RRC connection resume request message (RRC connection resume request), or the like. Alternatively, the RRC message may be a newly defined uplink RRC message. This is not limited in this application.

Optionally, when the RRC message further includes an identifier of the first relay device in addition to the position relationship indication information, the method includes:

Step S620: After receiving the RRC message, the access network device may determine whether the terminal device accesses the first relay device. For a determining method, refer to the description in FIG. 6. Details are not described herein again.

Optionally, when the RRC message includes the position relationship indication information, the identifier of the first relay device, and an authentication identifier or authentication information, the method further includes:

Step S630: The access network device sends identification information and authentication information of the terminal device to the first relay device. Correspondingly, the first relay device receives the identification information and the authentication information of the terminal device.

It should be understood that the identification information of the terminal device may be an identifier of the terminal device carried when the first relay device forwards the uplink RRC message, or an identifier of the terminal device carried by the terminal device in the uplink RRC message, for example, a C-RNTI. The identifier of the terminal device herein is used by the access network device and the first relay device to identify the terminal device.

For example, a downlink RRC message fed back by the access network device to the terminal device includes C-RNTI allocated to the terminal device under the first relay device and the authentication information or the authentication identifier.

Optionally, the method further includes:
Step S640: After receiving the identification information and the authentication information of the terminal device, the first relay device determines whether to allow the access by the terminal device.
Step S650: The first relay device sends a determining result to the access network device. Correspondingly, the access network device receives the determining result.

For example, the determining result includes the identifier of the terminal device and indication information indicating whether the terminal device is allowed to access.

FIG. 11 is an interaction flowchart of a relay communication method according to an embodiment of this application. A method 700 shown in FIG. 11 includes the following steps.

Step S710: After determining to access a first relay device, an AS layer of a terminal device sends an access request message to the first relay device. Correspondingly, the first relay device receives the access request message. The access request message is, for example, a random access channel (random access channel, RACH) message 1, that is, a message 1.

Optionally, the access request further includes authentication information or an authentication identifier that is of the first relay device and that is obtained by the terminal device by scanning a code at an application layer. The first relay device may determine, based on the authentication information or the authentication identifier in the access request message, whether to allow the access by the terminal device. If allowing the access, the first relay device forwards an uplink RRC message of the terminal device to an access network device. If not allowing the access, the first relay device directly notifies the terminal device that the access is not allowed, or when the first relay device forwards the uplink RRC message of the terminal device, encapsulates an adaptation layer header (or a packet header at another layer) of the uplink RRC message in a way in which an access not allowed indication is included, so that when receiving the uplink RRC message, the access network device sends, based on the access not allowed indication, an RRC message to the UE to reject setup, reestablishment, or resume of an RRC connection.

Step S720: The terminal device sends position relationship indication information to the access network device through the first relay device, where the position relationship indication information indicates a position relationship between the first relay device and the terminal device. Correspondingly, the access network device receives the position relationship indication information.

Optionally, the position relationship indication information is carried in the RRC message.

For example, the RRC message may be an RRC connection setup request message (RRC connection setup request), an RRC connection reestablishment request message (RRC connection reestablishment request), an RRC connection resume request message (RRC connection resume request), or the like. Alternatively, the RRC message may be a newly defined uplink RRC message. This is not limited in this application.

Optionally, the packet header of the RRC message includes authentication information or the authentication identifier that is of the terminal device and that is on the first relay device. The packet header of the RRC message may be an MAC packet header, a PHY packet header, an RLC packet header, a PDCP packet header, or the like. This is not limited in this application.

It should be understood that the first relay device may perform authentication based on the authentication information in the access request message, or may perform authentication based on the authentication information in the packet header of the uplink RRC message, and when forwarding the uplink RRC message of the terminal device, carries the position relationship indication information in the adaptation layer header of the uplink RRC message.

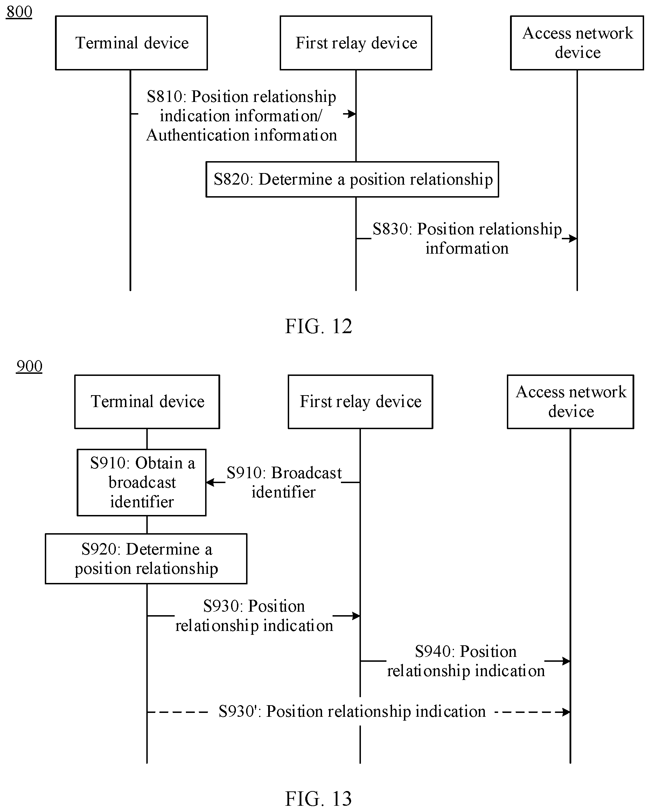

FIG. 12 is an interaction flowchart of a relay communication method according to an embodiment of this application. A method 800 shown in FIG. 12 includes the following steps.

Step S810: A terminal device sends, to a first relay device, position relationship indication information and/or authentication information that is of the terminal device and that is on the first relay device. Correspondingly, the first relay device receives the position relationship indication information and/or the authentication information.

Step S820: The first relay device determines, based on the position relationship indication information and/or the authentication information, a position relationship between the terminal device and the first relay device.

Step S830: The first relay device sends a determining result (position relationship information) to an access network device. Correspondingly, the access network device receives the position relationship information.

Specifically, the position relationship indication may be a field in car indication. A value of the field 1 or true indicates that the first relay device and the terminal device are relatively static, and a value 0 or false indicates that the first relay device and the terminal device are relatively moving. For details, refer to the description in the method 400. Details are not described herein again.

It should be understood that, in the solution of determining the first relay device and the terminal device by scanning the code, the first relay device may further obtain information of a user ticket by scanning the code, for example, a station from which the user gets on and a station to which the user gets off. After the first relay device determines that the user arrives at the station, for the terminal device in a connected state, an application layer of the first relay device notifies an AS layer of an identifier of the terminal device and a station arrival indication, and the AS layer of the first relay device indicates the terminal device to disconnect the connection (for example, a disconnect indication), or the first relay device notifies the access network device. The access network device indicates the terminal device to disconnect the connection (for example, a disconnect indication), or after the station arrival, the first relay device notifies, through the application layer, an application of the terminal device that the connection to the first relay device needs to be disconnected after the station arrival, and then the application of the terminal device indicates an AS layer of the terminal device to disconnect the connection to the first relay device after the station arrival. The AS layer of the terminal device further notifies the access network device or the first relay device.

### Manner 5:

FIG. 13 is an interaction flowchart of a relay communication method according to an embodiment of this application.

In this solution, it is assumed that an identifier of a first relay device is pasted on a means of transport in which the first relay device is located, and an identifier broadcast by the first relay device over an air interface is consistent with the identifier pasted on the means of transport.

Optionally, the identifier of the first relay device may be a PCI, a CGI, or another readable name identifier. In addition to broadcasting the identifier, the first relay device may further broadcast a relay device indication.

For example, the first relay device broadcasts the identifier of the first relay device + the relay device indication. After receiving the broadcast, a terminal device learns that the cell is a cell managed by the relay device and is different from another cell.

A method 900 shown in FIG. 13 includes the following steps.

Step S910: The first relay device broadcasts the relay device identifier over the air interface. Correspondingly, the terminal device obtains the identifier of the first relay device.

Step S920: The terminal device determines a position relationship between the terminal device and the first relay device.

For example, an AS layer of the terminal device sends the identifier of the first relay device to an application layer, and triggers the application layer to send a pop-up message to query whether the user needs to access the first relay device or whether a user is in the vehicle in which the first relay device is located.

After receiving the pop-up message, the user may check the identifier of the relay device pasted on the vehicle in which the first relay device is located, to determine whether the user is in the corresponding vehicle in which the first relay device is located. After the user replies to the pop-up message, for example, the user replies that the user is in the vehicle in which the first relay device is located, the application layer of the terminal device sends a position relationship indication to the AS layer. Optionally, the position relationship indication may further carry an indication indicating whether to access the first relay device.

Step S930 and step S940: The terminal device sends position relationship indication information to the first relay device. After receiving the position relationship indication information, the first relay device sends the position relationship indication information and an identifier of the terminal device to the access network device.

Step S930' (an alternative to step S930 and step S940): The terminal device sends position relationship indication information and the identifier of the first relay device to the access network device.

Subsequently, if finding that a signal of the first relay device deteriorates, the AS layer of the terminal device indicates the application to query whether the user leaves the vehicle in which the first relay device is located, for example, sending a pop-up message to query the user, the user enters corresponding information, and then the application sends a query result to the AS layer. The AS layer notifies the access network device of the position relationship (for example, not in car) between the terminal device and the first relay device by using an uplink RRC message, or the AS layer notifies the first relay device of the position relationship between the terminal device and the first relay device, and the first relay device reports the position relationship together with the identifier of the terminal device to the access network device.

Alternatively, in step S920, after the content replied by the user to the pop-up message is that the user is in the vehicle in which the first relay device is located, the application of the terminal device periodically queries, by sending the pop-up message, whether the user is still in the vehicle in which the first relay device is located. After the content replied by the user to the pop-up message is that the user is not in the vehicle in which the first relay device is located, the application notifies the AS layer that the user is not in the vehicle in which the first relay device is located, and the application stops the periodical query by sending the pop-up message.

Optionally, a condition for the terminal device to determine whether to access the first relay device or disconnect from the first relay device may be preconfigured by the access network device (for example, a geographical area, an approximate time interval, a speed interval, or the like) or may be indicated by the access network device to the terminal device after the terminal device sends the position relationship indication to the access network device.

It should be understood that the dashed-line steps in the foregoing flowcharts are optional steps, and a sequence of the steps is determined according to internal logic of the method. Sequence numbers shown in the figures are merely examples, and does not constitute a limitation on this application.

It should be further understood that the methods provided in embodiments of this application may be used independently, or may be used together. This is not limited in this application.

It should be noted that the execution body shown in FIG. 6 to FIG. 13 is merely an example, and the execution body may alternatively be a chip, a chip system, or a processor that supports the execution body in implementing the methods shown in FIG. 6 to FIG. 13. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, the methods and the operations implemented by the access network device may alternatively be implemented by a component (for example, a chip or a circuit) that may be used in the access network device, and the methods and the operations implemented by the terminal device may alternatively be implemented by a component (for example, a chip or a circuit) that may be used in the terminal device. The methods and the operations implemented by the relay device may alternatively be implemented by a component (for example, a chip or a circuit) that may be used in the relay device. The methods and the operations implemented by the core network element may alternatively be implemented by a component (for example, a chip or a circuit) that may be used in the core network element.

The foregoing mainly describes the solutions provided in embodiments of this application from a perspective of interaction between network elements. It may be understood that, to implement the foregoing functions, each network element like a transmitting device or a receiving device includes a corresponding hardware structure and/or software module for performing each function. A person skilled in the art may be aware that, with reference to units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmitting device or the receiving device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in an actual implementation. An example in which each functional module is obtained through division based on each corresponding function is used below for description.

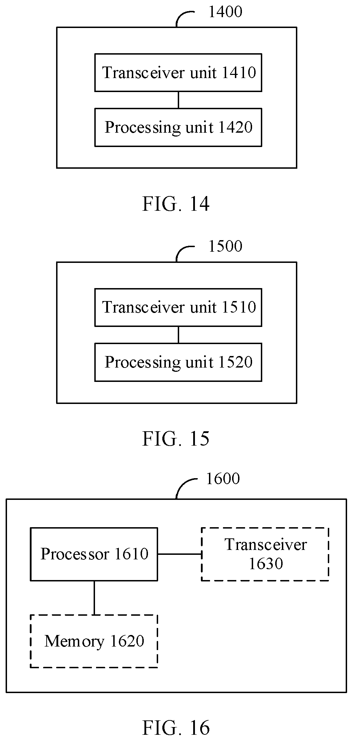

FIG. 14 is a schematic block diagram of a communication apparatus according to an embodiment of this application. A communication apparatus 1400 includes a transceiver unit 1410 and a processing unit 1420. The transceiver unit 1410 may communicate with the outside, and the processing unit 1420 is configured to perform data processing. The transceiver unit 1410 may also be referred to as a communication interface or a communication unit.

Optionally, the communication apparatus 1400 may further include a storage unit. The storage unit may be configured to store instructions and/or data. The processing unit 1420 may read the instructions and/or the data in the storage unit.

In a case, the communication apparatus 1400 may be an access network device, the transceiver unit 1410 is configured to perform a receiving or sending operation of the access network device in the foregoing method embodiments, and the processing unit 1420 is configured to perform an internal processing operation of the access network device in the foregoing method embodiments.

In a design, the transceiver unit 1410 is configured to receive first information from a core network element, where the first information includes information of a relay device that a terminal device is allowed to access, and the transceiver unit 1410 is configured to receive second information from the terminal device, where the second information includes an identifier of a first relay device, where the first information and the second information are used to determine whether the terminal device is allowed to access the first relay device.

In a possible implementation, the second information further includes at least one of a public land mobile network identifier associated with the first relay device, a network slice identifier associated with the first relay device, and a non-public network identifier associated with the first relay device.

In a possible implementation, the first information includes an identifier of the relay device.

In a possible implementation, the first information includes at least one of a public land mobile network identifier associated with the relay device, a network slice identifier associated with the relay device, and a non-public network identifier associated with the relay device.

When the first information does not include the identifier of the relay device, the processing unit 1420 needs to determine, based on a mapping relationship between the identifier of the relay device and another identifier included in the first information, whether the terminal device is allowed to access the first relay device.

In a possible implementation, the transceiver unit 1410 is further configured to receive third information from the first relay device, where the third information includes the identifier of the first relay device and any one or more of the following associated with the identifier of the first relay device: the public land mobile network PLMN identifier, the network slice identifier, and the non-public network NPN identifier.

In a possible implementation, the transceiver unit 1410 is specifically configured to receive an initial context setup request message from a mobility management network element, where the initial context setup request message includes the first information.

In a possible implementation, the transceiver unit 1410 is further configured to send first indication information to the terminal device, where the first indication information indicates the terminal device to access the first relay device.

In another case, the communication apparatus 1400 may be a component configured in the access network device, for example, a chip in the access network device.

In this case, the transceiver unit 1410 may be an interface circuit, a pin, or the like. Specifically, the interface circuit may include an input circuit and an output circuit, and the processing unit 1420 may include a processing circuit.

Optionally, the transceiver unit 1410 may alternatively be a radio frequency module. The processing unit 1420 may be a baseband module. The radio frequency module is mainly configured to receive and send radio frequency signals and perform conversion between a radio frequency signal and a baseband signal. The baseband module is mainly configured to perform baseband processing, control a base station, and the like.

FIG. 15 is a schematic block diagram of a communication apparatus according to an embodiment of this application. A communication apparatus 1500 includes a transceiver unit 1510 and a processing unit 1520. The transceiver unit 1510 may communicate with the outside, and the processing unit 1520 is configured to perform data processing. The transceiver unit 1510 may also be referred to as a communication interface or a communication unit.

Optionally, the communication apparatus 1500 may further include a storage unit. The storage unit may be configured to store instructions and/or data. The processing unit 1520 may read the instructions and/or the data in the storage unit.

In a case, the communication apparatus 1500 may be a core network element, for example, a mobility management network element. The transceiver unit 1510 is configured to perform a receiving or sending operation of the core network element in the foregoing method embodiments, and the processing unit 1520 is configured to perform an internal processing operation of the core network element in the foregoing method embodiments. The transceiver unit 1510 is configured to obtain first information, where the first information includes information of a relay device that a terminal device is allowed to access, and the transceiver unit 1510 is further configured to send the first information to an access network device, where the first information is used to determine whether the terminal device is allowed to access a first relay device.

In a possible implementation, the first information includes an identifier of the relay device.

In a possible implementation, the first information includes at least one of a public land mobile network identifier associated with the relay device, a network slice identifier associated with the relay device, and a non-public network identifier associated with the relay device.

In a possible implementation, the transceiver unit 1510 is specifically configured to send an initial context setup request message to the access network device, where the initial context setup request message includes the first information.

In another case, the communication apparatus 1500 may be the first relay device, the transceiver unit 1510 is configured to perform a receiving or sending operation of the first relay device in the foregoing method embodiments, and the processing unit 1520 is configured to perform an internal processing operation of the first relay device in the foregoing method embodiments. The transceiver unit 1510 is configured to obtain third information, where the third information includes the identifier of the first relay device and one or more of the following associated with the identifier of the first relay device: a public land mobile network PLMN identifier, a network slice identifier, and a non-public network NPN identifier. The transceiver unit 1510 is further configured to send the third information to the access network device or the terminal device, where the third information is used to determine whether the terminal device is allowed to access the first relay device.

In a possible implementation, the transceiver unit 1510 is specifically configured to send a broadcast message to the terminal device, where the broadcast message includes the third information.

It may be understood that the communication apparatus 1500 may be a component configured in the first relay device, for example, a chip in the first relay device.

In this case, the transceiver unit 1510 may be an interface circuit, a pin, or the like. Specifically, the interface circuit may include an input circuit and an output circuit, and the processing unit 1520 may include a processing circuit.

As shown in FIG. 16, an embodiment of this application further provides a communication apparatus 1600. The communication apparatus 1600 includes a processor 1610. The processor 1610 is coupled to a memory 1620. The memory 1620 is configured to store a computer program or instructions and/or data. The processor 1610 is configured to execute the computer program or the instructions and/or the data stored in the memory 1620, so that the methods in the foregoing method embodiments are performed.

Optionally, the communication apparatus 1600 includes one or more processors 1610.

Optionally, as shown in FIG. 16, the communication apparatus 1600 may further include the memory 1620.

Optionally, the communication apparatus 1600 may include one or more memories 1620.

Optionally, the memory 1620 may be integrated with the processor 1610, or the memory 1620 and the processor 1610 are separately disposed.

Optionally, as shown in FIG. 16, the communication apparatus 1600 may further include a transceiver 1630 and/or a communication interface. The transceiver 1630 and/or the communication interface are/is configured to receive and/or send a signal. For example, the processor 1610 is configured to control the transceiver 1630 to receive and/or send the signal.

It should be understood that the communication interface is used by an access network device to communicate with another network element. For example, the communication interface is used by the access network device to communicate with a network element like a core network element or another base station.

In a solution, the communication apparatus 1600 is configured to implement the operations performed by the access network device in the foregoing method embodiments.

For example, the processor 1610 is configured to implement an operation performed internally by the access network device in the foregoing method embodiments, and the transceiver 1630 is configured to implement a receiving or sending operation performed by the access network device in the foregoing method embodiments. The processing unit 1420 in the apparatus 1400 may be the processor in FIG. 16, and the transceiver unit 1410 may be the transceiver and/or the communication interface in FIG. 16. For specific operations performed by the processor 1610, refer to the foregoing descriptions of the processing unit 1420. For operations performed by the transceiver 1630, refer to the descriptions of the transceiver unit 1410. Details are not described herein again.

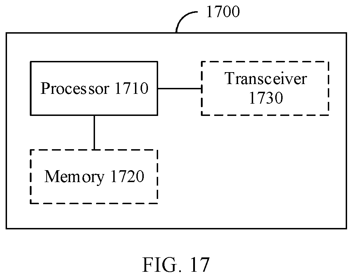

As shown in FIG. 17, an embodiment of this application further provides a communication apparatus 1700. The communication apparatus 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, so that the methods in the foregoing method embodiments are performed.

Optionally, the communication apparatus 1700 includes one or more processors 1710.

Optionally, as shown in FIG. 17, the communication apparatus 1700 may further include the memory 1720.

Optionally, the communication apparatus 1700 may include one or more memories 1720.

Optionally, the memory 1720 may be integrated with the processor 1710, or the memory 1720 and the processor 1710 are separately disposed.

Optionally, as shown in FIG. 17, the communication apparatus 1700 may further include a transceiver 1730 and/or a communication interface. The transceiver 1730 and/or the communication interface are/is configured to receive and/or send a signal. For example, the processor 1710 is configured to control the transceiver 1730 and/or the communication interface to receive and/or send the signal.

In a solution, the communication apparatus 1700 is configured to implement the operations performed by the core network element in the foregoing method embodiments. For example, the processor 1710 is configured to implement an operation performed internally by the core network element in the foregoing method embodiments, and the communication interface is configured to implement a receiving or sending operation performed by the core network element in the foregoing method embodiments. The processing unit 1520 in the apparatus 1500 may be the processor in FIG. 17, and the transceiver unit 1510 may be the communication interface. For specific operations performed by the processor 1710, refer to the foregoing descriptions of the processing unit 1520. For operations performed by the communication interface, refer to the descriptions of the transceiver unit 1510. Details are not described herein again.

In another solution, the communication apparatus 1700 is configured to implement the operations performed by the first relay device in the foregoing method embodiments. For example, the processor 1710 is configured to implement an operation performed internally by the first relay device in the foregoing method embodiments, and the transceiver 1730 is configured to implement a receiving or sending operation performed by the first relay device in the foregoing method embodiments. The processing unit 1520 in the apparatus 1500 may be the processor in FIG. 17, and the transceiver unit 1510 may be the transceiver in FIG. 17. For specific operations performed by the processor 1710, refer to the foregoing descriptions of the processing unit 1520. For operations performed by the transceiver 1730, refer to the descriptions of the transceiver unit 1510. Details are not described herein again.

An embodiment of this application further provides a computer-readable storage medium. The computer-readable storage medium stores computer instructions used to implement the method performed by the access network device or the method performed by the core network element or the first relay device in the foregoing method embodiments.

For example, when a computer program is executed by a computer, the computer can implement the method performed by the access network device or the method performed by the core network element or the first relay device in the foregoing method embodiments.

An embodiment of this application further provides a computer program product including instructions. When the instructions are executed by a computer, the computer is enabled to implement the method performed by the access network device or the method performed by the core network element or the first relay device in the foregoing method embodiments.

An embodiment of this application further provides a communication system. The communication system includes the access network device, the core network element, and the first relay device in the foregoing embodiments. Optionally, the communication system further includes the terminal device in the foregoing embodiments.

For explanations and beneficial effect of related content in any communication apparatus provided above, refer to the corresponding method embodiment provided above. Details are not described herein again.

In embodiments of this application, the access network device, the core network element, or the first relay device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not specifically limited in embodiments of this application, provided that a program that records code for the method provided in embodiments of this application can be run to perform communication according to the method provided in embodiments of this application. For example, the execution body of the method provided in embodiments of this application may be an access network device, a core network element, a first relay device, or a functional module that is in the access network device, the core network element, and the first relay device and that can invoke and execute the program.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network like the internet interacting with other systems by using the signal).

It should be further understood that first, second, and various numbers in this specification are merely used for differentiation for ease of description, and are not construed as a limitation on the scope of embodiments of this application.

It should be understood that a term "and/or" in this specification describes only an association relationship between associated objects and indicates that three relationships may exist. For example, A and/or B may indicate the following three cases: Only A exists, both A and B exist, and only B exists.

A person of ordinary skill in the art may be aware that units and steps described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division. The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc storage, a magnetic disk storage medium, or another magnetic storage device, or any other medium that can be used to carry or store expected program code in a form of instructions or a data structure and that can be accessed by a computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A relay communication method, comprising:
receiving, by an access network device, first information from a core network element, wherein the first information comprises information of a relay device that a terminal device is allowed to access; and
receiving, by the access network device, second information from the terminal device, wherein the second information comprises an identifier of a first relay device, wherein
the first information and the second information are used to determine whether the terminal device is allowed to access the first relay device.

2. The method according to claim 1, wherein
the second information further comprises one or more of a public land mobile network identifier associated with the first relay device, a network slice identifier associated with the first relay device, and a non-public network identifier associated with the first relay device.

3. The method according to claim 1 or 2, wherein the first information comprises an identifier of the relay device.

4. The method according to claim 1 or 2, wherein the first information comprises one or more of a public land mobile network identifier associated with the relay device, a network slice identifier associated with the relay device, and a non-public network identifier associated with the relay device.

5. The method according to claim 4, wherein the method further comprises:
receiving, by the access network device, third information from the first relay device, wherein the third information comprises the identifier of the first relay device and one or more of the following associated with the identifier of the first relay device:
the public land mobile network identifier;
the network slice identifier; and
the non-public network identifier.

6. The method according to any one of claims 1 to 5, wherein the receiving, by an access network device, first information from a core network element comprises:
receiving, by the access network device, an initial context setup request message from a mobility management network element, wherein the initial context setup request message comprises the first information.

7. The method according to any one of claims 1 to 6, wherein the method further comprises:
sending, by the access network device, first indication information, wherein the first indication information indicates the terminal device to access the first relay device.

8. A relay communication method, comprising:
obtaining, by a core network element, first information, wherein the first information comprises information of a relay device that a terminal device is allowed to access; and
sending, by the core network element, the first information to an access network device, wherein the first information is used to determine whether the terminal device is allowed to access a first relay device.

9. The method according to claim 8, wherein the first information comprises an identifier of the relay device.

10. The method according to claim 8 or 9, wherein the first information comprises at least one of a public land mobile network identifier associated with the relay device, a network slice identifier associated with the relay device, and a non-public network identifier associated with the relay device.

11. The method according to any one of claims 8 to 10, wherein the sending, by the core network element, the first information to an access network device comprises:
sending, by the core network element, an initial context setup request message to the access network device, wherein the initial context setup request message comprises the first information.

12. A relay communication method, comprising:
obtaining, by a first relay device, third information, wherein the third information comprises an identifier of the first relay device and one or more of the following associated with the identifier of the first relay device:
a public land mobile network identifier;
a network slice identifier; and
a non-public network identifier; and
sending, by the first relay device, the third information to an access network device, wherein the third information is used to determine whether a terminal device is allowed to access the first relay device.

13. The method according to claim 12, wherein the method further comprises:
receiving, by the first relay device, first indication information from the access network device, wherein the first indication information indicates the terminal device to access the first relay device; and
sending, by the first relay device, the first indication information to the terminal device.

14. A communication apparatus, comprising a module configured to perform the method according to any one of claims 1 to 7, a module configured to perform the method according to any one of claims 8 to 11, or a module configured to perform the method according to claim 12 or 13.

15. A communication apparatus, comprising a processor and a memory, wherein the memory is configured to store one or more computer programs, and when the one or more computer programs are run, the method according to any one of claims 1 to 7, the method according to any one of claims 8 to 11, or the method according to claim 12 or 13 is performed.

16. A communication system, wherein the communication system comprises an access network device, a core network element, and a first relay device, the access network device is configured to perform the method according to any one of claims 1 to 7, the core network element is configured to perform the method according to any one of claims 8 to 11, and the first relay device is configured to perform the method according to claim 12 or 13.

17. A computer-readable storage medium, wherein the computer-readable storage medium is configured to store a computer program, and when the computer program is run on a computer, the computer is enabled to perform the method according to any one of claims 1 to 7, the method according to any one of claims 8 to 11, or the method according to claim 12 or 13.

18. A computer program product, wherein the computer program product comprises computer program code, and when the computer program code is run, the method according to any one of claims 1 to 7, the method according to any one of claims 8 to 11, or the method according to claim 12 or 13 is implemented.
